(19) Europäisches Patentamt
European Patent Office
Office européen des brevets

(11) EP 2 543 711 A1

(12) **EUROPEAN PATENT APPLICATION**
published in accordance with Art. 153(4) EPC

(43) Date of publication:
**09.01.2013 Bulletin 2013/02**

(21) Application number: **11750682.4**

(22) Date of filing: **02.03.2011**

(51) Int Cl.:
***C09J 133/04*** *(2006.01)* ***C09J 7/02*** *(2006.01)*
***C09J 11/06*** *(2006.01)*

(86) International application number:
**PCT/JP2011/054718**

(87) International publication number:
**WO 2011/108573 (09.09.2011 Gazette 2011/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2011 JP 2011044054**
**02.03.2010 JP 2010045450**

(71) Applicant: **Nitto Denko Corporation**
**Ibaraki-shi, Osaka 567-8680 (JP)**

(72) Inventors:
- **YAMAGATA,Masato**
**Ibaraki-shi**
**Osaka 567-8680 (JP)**
- **AMANO,Tatsumi**
**Ibaraki-shi**
**Osaka 567-8680 (JP)**
- **KATAOKA,Kenichi**
**Ibaraki-shi**
**Osaka 567-8680 (JP)**

(74) Representative: **TBK**
**Bavariaring 4-6**
**80336 München (DE)**

# (54) ADHESIVE COMPOSITION, ADHESIVE SHEET, AND SURFACE PROTECTIVE FILM

(57) Provided are a pressure-sensitive adhesive composition that prevents static buildup on the non-antistatic adherend when peeled off, suppresses peeling electrification voltage, is reduced in the risk of staining the adherend, and has a high level of adhesion reliance and re-peeling properties without causing lifting or peeling; an antistatic pressure-sensitive adhesive sheet produced therewith; and a surface protecting film produced therewith. The pressure-sensitive adhesive composition includes (a) a (meth)acryl-based polymer containing, as a monomer unit, 0.01 to 20% by weight of a reactive surfactant represented by Formula (I) below; (b) another (meth)acryl-based polymer free of the reactive surfactant; and an ionic compound.

[Formula 1]

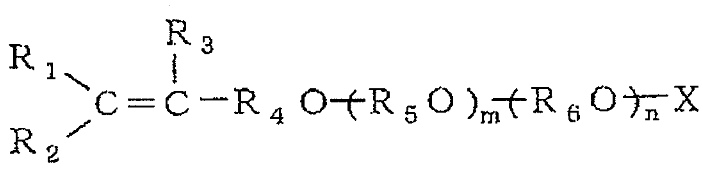

(I)

[in Formula (I), $R_1$, $R_2$, and $R_3$ are the same or different and each represent hydrogen or a methyl group, $R_4$ represents an alkylene group of 0 to 30 carbon atoms, wherein alkylene of 0 carbon atoms means the absence of $R_4$, $R_5$ and $R_6$ are the same or different and each represent an alkylene group of 1 to 30 carbon atoms, m represents an integer of 0 to 50, n represents an integer of 0 to 100, provided that m + n is an integer of 1 to 150, and X represents hydrogen or an anionic hydrophilic group.]

EP 2 543 711 A1

## Description

### FIELD OF THE INVENTION

The present invention relates to a pressure-sensitive adhesive composition having antistatic property, and pressure-sensitive adhesive sheets and a surface protecting film obtained by formulating into a form of a sheet or a tape using the composition.

Pressure-sensitive sheets comprising an antistatic pressure-sensitive adhesive composition of the present invention is suitably used in plastic products on which static electricity is easily generated. In particular, the pressure-sensitive adhesive sheet is useful as an antistatic pressure-sensitive adhesive sheet for static-sensitive applications such as electronic devices, and also useful as a surface protecting film for protecting the surface of an optical component such as a polarizing plate, a wavelength plate, an optical compensation film, or a reflector sheet.

### BACKGROUND ART

A surface protecting film is generally used for the purpose of preventing a scratch or a stain produced at processing or conveyance of a subject to be protected by applying to a subject to be protected via a pressure-sensitive adhesive layer coated on a protecting film side. For example, for the purpose of preventing a scratch or a stain, a surface protecting film is applied to an optical member such as a polarizing plate and a wavelength plate used in a panel of a liquid crystal display via a pressure-sensitive adhesive layer.

When a liquid crystal display is produced with these optical members, since a surface protecting film become unnecessary, it is peeled and removed from an optical member. Since the aforementioned optical member, pressure-sensitive adhesive, and surface protecting film are constructed of a plastic material, they have high electrical insulating property and generate static electricity upon friction or peeling. Therefore, also when a surface protecting film is peeled from an optical member, static electricity is generated. Therefore, also when a protecting film is peeled from an optical member such as a polarizing plate, static electricity is generated. When a voltage is applied to a liquid crystal in the state where static electricity remains, orientation of a liquid crystal molecule is lost, and a defect of a panel is generated. Then, in order to prevent such the disadvantage, a surface protecting film is subjected to various antistatic treatments.

Previously, as an attempt to suppress the aforementioned electrification of static electricity, for example, a method of preventing electrification by adding a low-molecular surfactant to a pressure-sensitive adhesive, and transferring a surfactant from a pressure-sensitive adhesive to an adherend has been disclosed (for example, see Patent Document 1). However, the low-molecular surfactant is easily bled on a surface of a pressure-sensitive adhesive agent and, when applied to a protecting film, staining of an adherend is feared. Therefore, when a pressure-sensitive adhesive with a low-molecular surfactant added thereto is applied to a protecting film for an optical member, there is a problem that optical property of an optical member is deteriorated.

In addition, a method of adding an antistatic agent comprising polyether polyol and alkali metal salt to an acryl pressure-sensitive adhesive to suppress an antistatic agent from bleeding on a surface of a pressure-sensitive adhesive has been disclosed (for example, see Patent Document 2). However, also in this method, bleeding of an antistatic agent is not avoided, and it has been found out that, when applied to a surface protecting film, staining of an adherend occurs with time or under a high temperature.

There is also disclosed an invention for achieving antistatic properties and low staining properties simultaneously, which is directed to an antistatic acrylic pressure-sensitive adhesive containing an ionic compound and an acryl-based copolymer having an alkylene oxide chain in the side chain (Patent Document 3). Unfortunately, this technique may cause a problem such as lifting or peeling.

### PRIOR ART DOCUMENTS

#### Patent Documents

Patent Document 1: Japanese Patent Application Laid-Open (JP-A) No. 09-165460
Patent Document 2: JP-A No. 06-128539
Patent Document 3: JP-A No. 2005-206776

SUMMARY OF THE INVENTION

Problems to be Solved by the Invention

In view of the circumstances, therefore, an object of the invention is to provide a pressure-sensitive adhesive composition that prevents static buildup on the non-antistatic adherend when peeled off, suppresses peeling electrification voltage, is reduced in the risk of staining the adherend, and has a high level of adhesion reliance and re-peeling properties without causing lifting or peeling, to provide an antistatic pressure-sensitive adhesive sheet produced therewith, and to provide a surface protecting film produced therewith.

Means for Solving the Problems

In order to solve the aforementioned problems, the present inventors intensively studied and, as a result, found out that the aforementioned object can be attained by a pressure-sensitive adhesive composition shown below, which resulted in completion of the present invention.

Specifically, the invention is directed to a pressure-sensitive adhesive composition including: (a) a (meth)acryl-based polymer containing, as a monomer unit, 0.01 to 20% by weight of a reactive surfactant represented by Formula (I) below; (b) another (meth)acryl-based polymer free of the reactive surfactant; and an ionic compound.

[Formula 1]

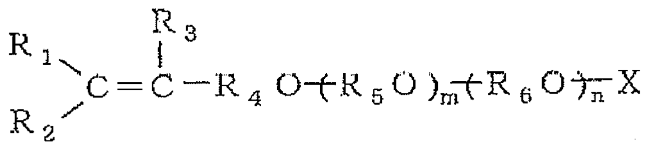

(I)

In Formula (I), $R_1$, $R_2$, and $R_3$ are the same or different and each represent hydrogen or a methyl group, $R_4$ represents an alkylene group of 0 to 30 carbon atoms, wherein alkylene of 0 carbon atoms means the absence of $R_4$, $R_5$ and $R_6$ are the same or different and each represent an alkylene group of 1 to 30 carbon atoms, m represents an integer of 0 to 50, n represents an integer of 0 to 100, provided that m + n is an integer of 1 to 150, and X represents hydrogen or an anionic hydrophilic group.

The pressure-sensitive adhesive composition of the invention, which is produced using the ionic compound as an antistatic agent, is inhibited from bleeding the antistatic agent, and has a high level of adhesion reliance and re-peeling properties with respect to the adherend even at high temperature. Although the exact reason why bleeding is suppressed using the ionic compound is not clear, it may be because the ionic compound has high compatibility with the base polymers.

In addition, the pressure-sensitive adhesive composition of the invention includes the (meth)acryl-based polymer (a) containing, as a monomer unit, the reactive surfactant represented by Formula (I), and therefore has a higher level of antistatic properties. Although the reason why the reactive surfactant having an ether group in its structure can improve the antistatic properties is not clear, the reactive surfactant improves the wettability to the adherend and allows efficient transfer of the ionic compound to the adherend.

Moreover, the use of the (meth)acryl-based polymer (b) free of the reactive surfactant in combination with the (meth)acryl-based polymer (a) enables the production of a pressure-sensitive adhesive composition that prevents static buildup on the non-antistatic adherend when peeled off, suppresses peeling electrification voltage, is reduced in the risk of staining the adherend, is inhibited from causing lifting or peeling, and has a high level of adhesion reliance and re-peeling properties, in contrast to a pressure-sensitive adhesive composition (a pressure-sensitive adhesive) containing only the (meth)acryl-based polymer (a) produced simply by copolymerization of the reactive surfactant or in contrast to a pressure-sensitive adhesive composition (a pressure-sensitive adhesive) containing only the (meth)acryl-based polymer (b) free of the reactive surfactant.

In an embodiment of the invention, an ionic liquid and/or an alkali metal salt is preferably used as the ionic compound. The ionic liquid is useful because it exhibits high conductivity by itself so that it can impart sufficient antistatic properties simply by being added in a small amount to a pressure-sensitive adhesive layer. The ionic liquid, which is in a liquid state, can be uniformly transferred to the adherend even when its content is very low, so that high antistatic performance can be produced while staining of the adherend is suppressed. On the other hand, the alkali metal salt has

a high degree of ionic dissociation even when its content is very low, and therefore, the use of the alkali metal salt makes it possible to produce high antistatic performance while staining of the adherend is suppressed.

The term "ionic liquid" refers to a molten salt (ionic compound) in a liquid state at room temperature (25°C). The ionic liquid, which is in a liquid state at room temperature, can be easily added, dispersed, and/or dissolved in a pressure-sensitive adhesive, as compared with a solid salt. In addition, the ionic liquid, which has no vapor pressure (or is nonvolatile), is not lost over time so that the resulting antistatic properties can be sustained.

As used herein, the term "(meth)acryl-based polymer" refers to an acryl-based polymer and/or a methacryl-based polymer. The term "alkyl (meth)acrylate" refers to alkyl acrylate and/or alkyl methacrylate, and the term "(meth) acrylate" refers to acrylate and/or methacrylate.

In the pressure-sensitive adhesive composition of the invention, it is preferable that the ionic liquid is one or more kinds of a nitrogen-containing onium salt, a sulfur-containing onium salt, and a phosphorus-containing onium salt.

In the pressure-sensitive adhesive composition of the invention, the ionic liquid preferably contains at least one of cations represented by Formulae (A) to (D) below, respectively.

[Formula 2]

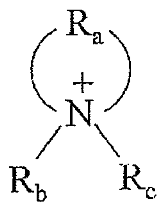

(A)

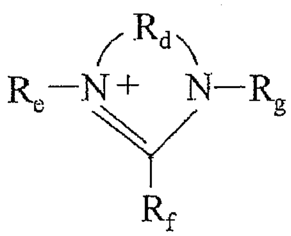

(B)

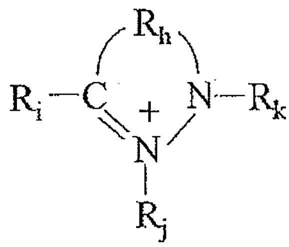

(C)

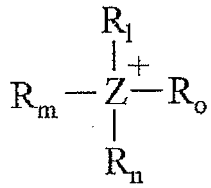

(D)

[in the formula (A), $R_a$ represents a hydrocarbon group of 4 to 20 carbon atoms, which may contain a hetero atom, and $R_b$ and $R_c$ are the same or different and each represent hydrogen or a hydrocarbon group of 1 to 16 carbon atoms, which may contain a hetero atom, provided that when the nitrogen atom contains a double bond, Rc is absent.]

[in the formula (B), $R_d$ represents a hydrocarbon group of 2 to 20 carbon atoms, which may contain a hetero atom, $R_e$, $R_f$, and Rg are the same or different and each represent hydrogen or a hydrocarbon group of 1 to 16 carbon atoms, which may contain a hetero atom.]

[in the formula (C), $R_h$ represents a hydrocarbon group of 2 to 20 carbon atoms, which may contain a hetero atom, $R_i$, $R_j$, and $R_k$ are the same or different and each represent hydrogen or a hydrocarbon group of 1 to 16 carbon atoms, which may contain a hetero atom.]

[in the formula (D), Z represents a nitrogen, sulfur, or phosphorus atom, and $R_l$, $R_m$, $R_n$, and $R_o$ are the same or different and each represent a hydrocarbon group of 1 to 20 carbon atoms, which may contain a hetero atom, provided that when Z is a sulfur atom, $R_o$ is absent.]

[in the formula (A), $R_a$ represents a hydrocarbon group of 4 to 20 carbon atoms, which may contain a hetero atom, and $R_b$ and $R_c$ are the same or different and each represent hydrogen or a hydrocarbon group of 1 to 16 carbon atoms, which may contain a hetero atom, provided that when the nitrogen atom contains a double bond, Rc is absent.]

[in the formula (B), $R_d$ represents a hydrocarbon group of 2 to 20 carbon atoms, which may contain a hetero atom, $R_e$, $R_f$, and Rg are the same or different and each represent hydrogen or a hydrocarbon group of 1 to 16 carbon atoms, which may contain a hetero atom.]

[in the formula (C), $R_h$ represents a hydrocarbon group of 2 to 20 carbon atoms, which may contain a hetero atom, $R_i$, $R_j$, and $R_k$ are the same or different and each represent hydrogen or a hydrocarbon group of 1 to 16 carbon atoms, which may contain a hetero atom.]

[in the formula (D), Z represents a nitrogen, sulfur, or phosphorus atom, and $R_l$, $R_m$, $R_n$, and $R_o$ are the same or different and each represent a hydrocarbon group of 1 to 20 carbon atoms, which may contain a hetero atom, provided that when Z is a sulfur atom, $R_o$ is absent.]

In the pressure-sensitive adhesive composition of the invention, the (meth)acryl-based polymer (a) and the (meth)acryl-based polymer (b) are preferably in a weight ratio (a) : (b) of 60 : 40 to 10 : 90.

In the pressure-sensitive adhesive composition of the invention, the (meth)acryl-based polymer (a) and the (meth)acryl-based polymer (b) each preferably have a weight average molecular weight of 200,000 to 1,000,000.

The pressure-sensitive adhesive composition of the invention preferably contains 0.01 to 10 parts by weight of the ionic compound, based on 100 parts by weight of the total of the (meth)acryl-based polymer (a) and the (meth)acryl-based polymer (b).

The invention is directed to a pressure-sensitive adhesive layer that preferably includes a product obtained by crosslinking the pressure-sensitive adhesive composition.

The invention is directed to a pressure-sensitive adhesive sheet that preferably includes: a support; and a pressure-sensitive adhesive layer formed on one or both sides of the support by crosslinking the pressure-sensitive adhesive composition.

As used herein, the term "pressure-sensitive adhesive sheet" is intended to include not only a pressure-sensitive adhesive sheet but also any other material in the form of a sheet, tape or film, such as a pressure-sensitive adhesive tape, a pressure-sensitive adhesive double coated tape, or a pressure-sensitive adhesive film.

The invention is directed to a surface protecting film that preferably includes a support including an antistatic-treated plastic base material; and a pressure-sensitive adhesive layer formed on one or both sides of the support by crosslinking the pressure-sensitive adhesive composition.

The surface protecting film of the invention preferably has a peeling time of 80 to 600 seconds as measured by a process that includes cutting the surface protecting film into a 60 mm long, 10 mm wide piece and measuring the time required to peel off a 50 mm long part of the piece under a constant load of 1.2 g.

Effects of the Invention

The pressure-sensitive adhesive composition of the invention includes the (meth)acryl-based polymer (a) containing, as a monomer unit, 0.01 to 20% by weight of a reactive surfactant represented by Formula (I) above; the (meth) acryl-based polymer (b) free of the reactive surfactant; and an ionic compound. Therefore, the pressure-sensitive adhesive layer produced by crosslinking the composition is reduced in the risk of staining the adherend (protected material), has good antistatic properties during peeling, particularly, good antistatic properties for the non-antistatic adherend, is inhibited from causing lifting or peeling, and has a high level of adhesion reliance and re-peeling properties. Although the exact reason why the crosslinking product of the ionic compound and the base polymer produced with the specified reactive surfactant for a monomer component can exhibit the above properties is not clear, it may be because the ionic compound can adequately coordinate to the ether group in the skeleton of the base polymer, as compared with a case where a conventional reactive surfactant is used, so that the ionic compound becomes less likely to bleed, which can simultaneously achieve antistatic properties and low staining properties. As compared with using only the (meth)acryl-based polymer (a) produced by copolymerization of the reactive surfactant, blending the (meth)acryl-based polymer (b) free of the reactive surfactant is particularly useful to suppress lifting or peeling.

BRIEF DESCRIPTION OF DRAWINGS

Fig. 1 is a schematic diagram of a potential measurement unit which is used to determine peeling electrification voltage in Examples; and

Fig. 2 is a schematic diagram of a measurement tool which is used to determine peeling time under a constant load in Examples.

EMBODIMENTS FOR CARRYING OUT THE INVENTION

The pressure-sensitive adhesive composition of the invention includes: (a) a (meth)acryl-based polymer containing, as a monomer unit, 0.01 to 20% by weight of a reactive surfactant represented by Formula (I) below; (b) another (meth)acryl-based polymer free of the reactive surfactant; and an ionic compound.

[Formula 3]

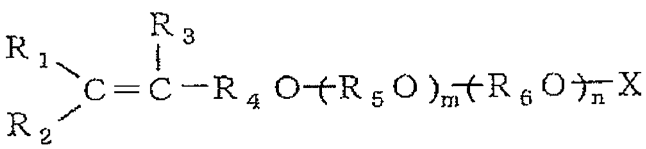

(I)

In Formula (I), $R_1$, $R_2$, and $R_3$ are the same or different and each represent hydrogen or a methyl group, $R_4$ represents an alkylene group of 0 to 30 carbon atoms, wherein alkylene of 0 carbon atoms means the absence of $R_4$, $R_5$ and $R_6$ are the same or different and each represent an alkylene group of 1 to 30 carbon atoms, m represents an integer of 0 to 50, n represents an integer of 0 to 100, provided that m + n is an integer of 1 to 150, and X represents hydrogen or an anionic hydrophilic group.

An ionic liquid and/or an alkali metal salt is preferably used as the ionic compound.

In the pressure-sensitive adhesive composition of the invention, it is preferable that the ionic liquid is one or more kinds of a nitrogen-containing onium salt, a sulfur-containing onium salt, and a phosphorus-containing onium salt.

In the pressure-sensitive adhesive composition of the invention, it is preferable that the ionic liquid contains one or more kinds of cations represented by the following general formulas (A) to (D). By an ionic liquids having these cations, further excellent antistatic ability is obtained.

[Formula 4]

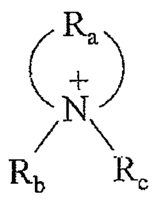

(A)

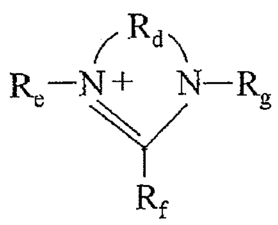

(B)

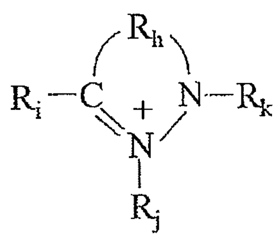

(C)

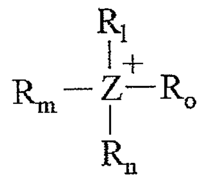

(D)

[in the formula (A), $R_a$ represents a hydrocarbon group of 4 to 20 carbon atoms, which may contain a hetero atom, and $R_b$ and $R_c$ are the same or different and each represent hydrogen or a hydrocarbon group of 1 to 16 carbon atoms, which may contain a hetero atom, provided that when the nitrogen atom contains a double bond, Rc is absent.]

[in the formula (B), $R_d$ represents a hydrocarbon group of 2 to 20 carbon atoms, which may contain a hetero atom, $R_e$, $R_f$, and Rg are the same or different and each represent hydrogen or a hydrocarbon group of 1 to 16 carbon atoms, which may contain a hetero atom.]

[in the formula (C), $R_h$ represents a hydrocarbon group of 2 to 20 carbon atoms, which may contain a hetero atom, $R_i$, $R_j$, and $R_k$ are the same or different and each represent hydrogen or a hydrocarbon group of 1 to 16 carbon atoms, which may contain a hetero atom.]

[in the formula (D), Z represents a nitrogen, sulfur, or phosphorus atom, and $R_l$, $R_m$, $R_n$, and $R_o$ are the same or different and each represent a hydrocarbon group of 1 to 20 carbon atoms, which may contain a hetero atom, provided that when Z is a sulfur atom, $R_o$ is absent.]

Examples of the cation represented by the formula (A) include a pyridinium cation, a piperidinium cation, a pyrrolidinium cation, a cation having a pyrroline skeleton, and a cation having a pyrrole skeleton.

Specific examples include 1-ethylpyridinium cation, a 1-butylpyridinium cation, 1-hexylpyridinium cation, a 1-butyl-3-methylpyridinium cation, a 1-butyl-4-methylpyridinium cation, a 1-hexyl-3-methylpyridinium cation, a 1-butyl-3,4-dimethylpyridinium cation, a 1,1-dimethylpyrrolidinium cation, 1-methyl-1-ethylpyrrolidinium cation, 1-methyl-1-propylpyrrolidinium cation, 1-methyl-1-butylpyrrolidinium cation, 1-methyl-1-pentylpyrrolidinium cation, 1-methyl-1-hexylpyrrolidinium cation, 1-methyl-1-heptylpyrrolidinium cation, 1-ethyl-1-propylpyrrolidinium cation, 1-ethyl-1-butylpyrrolidinium cation, 1-ethyl-1-pentylpyrrolidinium cation, 1-ethyl-1-hexylpyrrolidinium cation, 1-ethyl-1-heptylpyrrolidinium cation, 1,1-dipropylpyrrolidinium cation, 1-propyl-1-butylpyrrolidinium cation, 1,1-dibutylpyrrolidinium cation, 1-propylpiperidinium cation, 1-pentylpiperidinium cation, 1,1-dimethylpiperidinium cation, 1-methyl-1-ethylpiperidinium cation, 1-methyl-1-propylpiperidinium cation, 1-methyl-1-butylpiperidinium cation, 1-methyl-1-pentylpiperidinium cation, 1-methyl-1-hexylpiperidinium cation, 1-methyl-1-heptylpiperidinium cation, 1-ethyl-1-propylpiperidinium cation, 1-ethyl-1-butylpiperidinium cation, 1-ethyl-1-pentylpiperidinium cation, 1-ethyl-1-hexylpiperidinium cation, 1-ethyl-1-heptylpiperidinium cation, 1,1-dipropylpiperidinium cation, 1-propyl-1-butylpiperidinium cation, 1-propyl-1-butylpiperidinium cation, 1-propyl-1-pentylpiperidinium cation, 1-propyl-1-hexylpiperidinium cation, 1-propyl-1-heptylpiperidinium cation, 1,1-dibutylpiperidinium cation, 1-butyl-1-pentylpiperidinium cation, 1-butyl-1-hexylpiperidinium cation, 1-butyl-1-heptylpiperidinium cation, 2-methyl-1-pyrroline cation, 1-ethyl-2-phenylindole cation, 1,2-dimethylindole cation, and 1-ethylcarbazole cation.

Examples of the cation represented by the formula (B) include an imidazolium cation, a tetrahydropyrimidinium cation, and a dihydropyrimidinium cation.

Specific examples include a 1,3-dimethylimidazolium cation, a 1,3-diethylimidazolium cation, a 1-ethyl-3-methylimidazolium cation, a 1-butyl-3-methyimidazolium cation, a 1-hexyl-3-methylimidazolium cation, 1-ocytl-3-methylimidazolium cation, a 1-decyl-3-methylimidazolium cation, a 1-dodecyl-3-methylimidazolium cation, a 1-tetradecyl-3-methylimidazolium cation, 1-hexadecyl-3-methylimidazolium cation, 1-octadecyl-3-methylimidazolium cation, 1,2-dimethyl-3-propylimidazolium cation, a 1-ethyl-2,3-dimethylimidazolium cation, a 1-butyl-2,3-dimethylimidazolium cation, a 1-hexyl-2,3-dimethylimidazolium cation, a 1,3-dimethyl-1,4,5,6-tetrahydropyrimidinium cation, a 1,2,3-trimethyl-1,4,5,6-tetrahydropyrimidinium cation, a 1,2,3,4-tetramethyl-1,4,5,6-tetrahydropyrimidinium cation, a 1,2,3,5-tetramethyl-1,4,5,6-tetrahydropyrimidinium cation, a 1,3-dimethyl-1,4-dihydropyrimidinium cation, a 1,3-dimethyl-1,6-dihydropyrimidinium cation, a 1,2,3-trimethyl-1,4-dihydropyrimidinium cation, a 1,2,3-trimethyl-1,6-dihydropyrimidinium cation, a 1,2,3,4-tetramethyl-1,4-dihydropyrimidinium cation, and a 1,2,3,4-tetramethyl-1,6-dihydropyrimidinium cation.

Examples of the cation represented by the formula (C) include a pyrazolium cation, and a pyrazolinium cation.

Specific examples include a 1-methylpyrazolium cation, a 3-methylpyrazolium cation, and a 1-ethyl-2-methylpyrazolinium cation, 1-ethyl-2,3,5-trimethylpyrazolium cation, 1-propyl-2,3,5-trimethylpyrazolium cation, and 1-butyl-2,3,5-trimethylpyrazolium cation.

Examples of the cation represented by the formula (D) include a tetraalkylammonium cation, a trialkylsulfonium cation, a tetraalkylphosphonium cation, and those cations in which a part of the alkyl group is substituted with an alkenyl group, an alkoxyl group, or an epoxy group.

Specific examples include, for example, a tetramethyl ammonium cation, a tetraethyl ammonium cation, a tetrapropyl ammonium cation, a tetrabutyl ammonium cation, a tetrapentyl ammonium cation, a tetrahexyl ammonium cation, a tetraheptyl ammonium cation, a triethyl methyl ammonium cation, a tributyl ethyl ammonium cation, a trimethyl decyl ammonium cation, a trioctyl methyl ammonium cation, a tripentyl butyl ammonium cation, a trihexyl methyl ammonium cation, a trihexyl pentyl ammonium cation, a triheptyl methyl ammonium cation,tripentylbutylammonium cation, triheptylhexylammonium cation, dimethyldihexylammonium cation, dipropyldihexylammonium cation, heptyldimethylhexylammonium cation, N,N-diethyl-N-methyl-N-(2-methoxyethyl)ammonium cation, glycidyltrimethylammonium cation, diallyldimethylammonium cation, N,N-dimethyl-N,N-dipropylammonium cation, N,N-dimethyl-N,N-dihexylammonium cation, N,N-dipropyl-N,N-dihexylammonium cation, N,N-dimethyl-N-ethyl-N-propylammonium cation, N,N-dimethyl-N-ethyl-N-butylammonium cation, N,N-dimethyl-N-ethyl-N-pentylammonium cation, N,N-dimethyl-N-ethyl-N-hexylammonium cation, N,N-dimethyl-N-ethyl-N-heptylammonium cation, N,N-dimethyl-N-ethyl-N-nonylammonium cation, N,N-dimethyl-N-propyl-N-butylammonium cation, N,N-dimethyl-N-propyl-N-pentylammonium cation, N,N-dimethyl-N-propyl-N-hexylammonium cation, N,N-dimethyl-N-propyl-N-heptylammonium cation, N,N-dimethyl-N-butyl-N-hexylammonium cation, N,N-dimethyl-N-butyl-N-heptylammonium cation, N,N-dimethyl-N-pentyl-N-hexylammonium cation, trimethylheptylammonium cation, N,N-diethyl-N-methyl-N-propylammonium cation, N,N-diethyl-N-methyl-N-pentylammonium cation, N,N-diethyl-N-methyl-N-heptylammonium cation, N,N-diethyl-N-propyl-N-pentylammonium cation, triethylmethylammonium cation, triethylpropylammonium cation, triethylpentylammonium cation, triethylheptylammonium cation, N, N-dipropyl-N-methyl-N-ethylammonium cation, N,N-dipropyl-N-methyl-N-pentylammonium cation, N,N-dipropyl-N-butyl-N-hexylammonium cation, N,N-dipropyl-N,N-dihexylammonium cation, N,N-dibutyl-N-methyl-N-pentylammonium cation, N,N-dibutyl-N-methyl-N-hexylammonium cation, N,N-dimethyl-N,N-dihexylammonium cation, trioctylmethylammonium cation, N-methyl-N-ethyl-N-propyl-N-pentylammonium cation, trimethylsulfonium cation, triethylsulfonium cation, tributylsulfonium cation, trihexylsulfonium cation, diethylmethylsulfonium cation, dibutylethylsulfonium cation, dimethyldecylsulfonium cation, tetramethylphosphonium cation, tetraethylphosphonium cation, tetrabutylphosphonium cation, tetrapentylphosphonium cation, tetrahexylphosphonium cation, phosphonium cation, tetraheptylphosphonium cation, tetraoctylphosphonium cation, a triethyl methyl phosphonium cation, a tributyl ethyl phosphonium cation, a trimethyl decyl phosphonium cation, and the like.

Among them, preferably used are tetraalkylammonium cations such as tetramethylammonium cation, tetraethylammonium cation, tetrapropylammonium cation, tetrabutylammonium cation, tetrapentylammonium cation, tetrahexylammonium cation, tetraheptylammonium cation, triethylmethylammonium cation, tributylethylammonium cation, trimethyldecylammonium cation, trioctylmethylammonium cation, tripentylbutylammonium cation, trihexylmethylammonium cation, trihexylpentylammonium cation, triheptylmethylammonium cation, tripentylbutylammonium cation, triheptylhexylammonium cation, dimethyldihexylammonium cation, dipropyldihexylammonium cation, heptyldimethylhexylammonium cation, N,N-diethyl-N-methyl-N-(2-methoxyethyl)ammonium cation, glycidyltrimethylammonium cation, diallyldimethylammonium cation, N,N-dimethyl-N-ethyl-N-propylammonium cation, N,N-dimethyl-N-ethyl-N-butylammonium cation, N,N-dimethyl-N-ethyl-N-pentylammonium cation, N,N-dimethyl-N-ethyl-N-hexylammonium cation, N,N-dimethyl-N-ethyl-N-heptylammonium cation, N,N-dimethyl-N-ethyl-N-nonylammonium cation, N,N-dimethyl-N-propyl-N-butylammonium cation, N,N-dimethyl-N-propyl-N-pentylammonium cation, N,N-dimethyl-N-propyl-N-hexylammonium cation, N, N-dimethyl-N-propyl-N-heptylammonium cation, N,N-dimethyl-N-butyl-N-hexylammonium cation, N,N-dimethyl-N-butyl-N-heptylammonium cation, N,N-dimethyl-N-pentyl-N-hexylammonium cation, trimethylheptylammonium cation, N,N-diethyl-N-methyl-N-propylammonium cation, N,N-diethyl-N-methyl-N-pentylammonium cation, N,N-diethyl-N-methyl-N-heptylammonium cation, N,N-diethyl-N-propyl-N-pentylammonium cation, N,N-dimethyl-N,N-dihexylammonium cation, triethylmethylammonium cation, triethylpropylammonium cation, triethylpentylammonium cation, triethylheptylammonium cation, N,N-dipropyl-N-methyl-N-ethylammonium cation, N,N-dipropyl-N-methyl-N-pentylammonium cation, N,N-dipropyl-N-butyl-N-hexylammonium cation, N,N-dipropyl-N,N-dihexylammonium cation, N,N-dibutyl-N-methyl-N-pentylammonium cation, N,N-dibutyl-N-methyl-N-hexylammonium cation, trioctylmethylammonium cation, and N-methyl-N-ethyl-N-propyl-N-pentylammonium cation; trialkylsulfonium cations such as trimethylsulfonium cation, triethylsulfonium cation, tributylsulfonium cation, trihexylsulfonium cation, diethylmethylsulfonium cation, dibutylethylsulfonium cation, and dimethyldecylsulfonium cation, and tetraalkylphosphonium cations such as tetramethylphosphonium cation, tetraethylphosphonium cation, tetrabutylphosphonium cation, tetrapentylphosphonium cation, tetrahexylphosphonium cation, tetraheptylphosphonium cation, tetraoctylphosphonium cation, triethylmethylphosphonium cation, tributylethylphosphonium cation, tributylethylphosphonium cation, and trimethyldecylphosphonium cation.

Besides the ionic liquid, an alkali metal salt may be used as the ionic compound. The cation component of the alkali metal salt may be an alkali metal ion such as $Li^+$, $Na^+$, or $K^+$, and among them, $Li^+$ is particularly effective as the cation component in forming a pressure-sensitive adhesive composition with high antistatic properties.

On the other hand, the anionic component is not particularly limited as far as it satisfies that it becomes an ionic liquid. Specifically, for example, $Cl^-$, $Br^-$, $I^-$, $SCN^-$, $AlCl_4^-$, $Al_2Cl_7^-$, $BF_4^-$, $PF_6^-$, $ClO_4^-$, $NO_3^-$, $CH_3COO^-$, $CF_3COO^-$, $CH_3SO_3^-$, $CF_3SO_3^-$, $(CF_3SO_2)_2N^-$, $(CF_3SO_2)_3C^-$, $AsF_6^-$, $SbF_6^-$ , $NbF_6^-$, $TaF_6^-$, $F(HF)_n^-$, $(CN)_2N^-$, $C_4F_9SO_3^-$, $(C_2F_5SO_2)_2N^-$, $C_3F_7COO^-$, and $(CF_3SO_2)(CF_3CO)N^-$, $B(CN)_4^-$ $C(CN)_3^-$, $N(CN)_2^-$, $CH_3OSO_3^-$, $C_2H_5OSO_3^-$, $C_4H_9OSO_3^-$, $C_6H_{13}OSO_3^-$, $C_8H_{17}OSO_3^-$, p-toluenesulfonate anion, 2-(2-methoxyethyl)ethyl sulfate anion, and $(C_2F_5)_3PF_3^-$. In particular, a fluorine atom-containing anion component is preferably used because it can form a low-melting-point ionic liquid or can form an ionic liquid or an alkali metal salt having high compatibility with the acrylic polymers. The anion component represented by the Formula below may also be used.

[Formula 5]

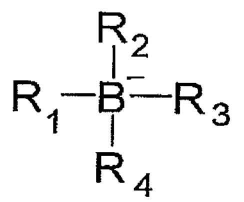

(C2)

In Formula (C2), $R_1$ to $R_4$ each independently represent a hydrogen atom, an optionally substituted alkyl group, an optionally substituted alkenyl group, an optionally substituted alkynyl group, an optionally substituted aryl group, or an optionally substituted heterocyclic group, wherein a hydrogen atom of the substituent may also be substituted with another substituent (such as an electron-withdrawing substituent).

Among ionic compounds that may be used in the invention, examples of ionic liquids may be selected and used as appropriate from combinations of the above cation components and the above anion components. Specific examples include, for example, 1-butyl pyridinium tetrafluoro borate, 1-butyl pyridinium hexafluoro phosphate, 1-butyl-3-methyl pyridinium tetrafluoro borate, 1-butyl-3-methyl pyridinium trifluoromethane sulfonate, 1-butyl-3-methyl pyridinium bis (trifluoromethanesulfonyl) imide, 1-butyl-3-methyl pyridinium (pentafluoro ethane sulfonyl) imide, 1-hexyl pyridinium tetrafluoro borate, 1,1-dimethylpyrrolidinium bis(trifluoromethanesulfonyl)imide, 1-methyl-1-ethylpyrrolidinium bis(trifluoromethanesulfonyl)imide, 1-methyl-1-propylpyrrolidinium bis(trifluoromethanesulfonyl)imide, 1-methyl-1-butylpyrrolidinium bis(trifluoromethanesulfonyl)imide, 1-methyl-1-pentylpyrrolidinium bis(trifluoromethanesulfonyl)imide, 1-methyl-1-hexylpyrrolidinium bis(trifluoromethanesulfonyl)imide, 1-methyl-1-heptylpyrrolidinium bis(trifluoromethanesulfonyl)imide, 1,1-diethylpyrrolidinium bis(trifluoromethanesulfonyl)imide, 1-ethyl-1-propylpyrrolidinium bis(trifluoromethanesulfonyl)imide, 1-ethyl-1-butylpyrrolidinium bis(trifluoromethanesulfonyl)imide, 1-ethyl-1-pentylpyrrolidinium bis(trifluoromethanesulfonyl)imide, 1-ethyl-1-hexylpyrrolidinium bis(trifluoromethanesulfonyl)imide, 1-ethyl-1-heptylpyrrolidinium bis(trifluoromethanesulfonyl)imide, 1,1-dipropylpyrrolidinium bis(trifluoromethanesulfonyl)imide, 1-propyl-1-butylpyrrolidinium bis(trifluoromethanesulfonyl)imide, 1-propyl-1-pentylpyrrolidinium bis(trifluoromethanesulfonyl)imide, 1-propyl-1-hexylpyrrolidinium bis(trifluoromethanesulfonyl)imide, 1-propyl-1-heptylpyrrolidinium bis(trifluoromethanesulfonyl)imide, 1,1-dibutylpyrrolidinium bis(trifluoromethanesulfonyl)imide, 1-propylpiperidinium bis(trifluoromethanesulfonyl)imide, 1-pentylpiperidinium bis(trifluoromethanesulfonyl)imide, 1,1-dibutylpiperidinium bis(trifluoromethanesulfonyl)imide, 1-methyl-1-ethylpiperidinium bis(trifluoromethanesulfonyl)imide, 1-methyl-1-propylpiperidinium bis(trifluoromethanesulfonyl)imide, 1-methyl-1-butylpiperidinium bis(trifluoromethanesulfonyl)imide, 1-methyl-1-pentylpiperidinium bis(trifluoromethanesulfonyl)imide, 1-methyl-1-hexylpiperidinium bis(trifluoromethanesulfonyl)imide, 1-methyl-1-heptylpiperidinium bis(trifluoromethanesulfonyl)imide, 1,1-diethylpiperidinium bis(trifluoromethanesulfonyl)imide, 1-ethyl-1-propylpiperidinium bis(trifluoromethanesulfonyl)imide, 1-ethyl-1-butylpiperidinium bis(trifluoromethanesulfonyl)imide, 1-ethyl-1-pentylpiperidinium bis(trifluoromethanesulfonyl)imide, 1-ethyl-1-hexylpiperidinium bis(trifluoromethanesulfonyl)imide, 1-ethyl-1-heptylpiperidinium bis(trifluoromethanesulfonyl)imide, 1,1-dipropylpiperidinium bis(trifluoromethanesulfonyl)imide, 1-propyl-1-butylpiperidinium bis(trifluoromethanesulfonyl)imide, 1-propyl-1-pentylpiperidinium bis(trifluoromethanesulfonyl)imide, 1-propyl-1-hexylpiperidinium bis(trifluoromethanesulfonyl)imide, 1-propyl-1-heptylpiperidinium bis (trifluoromethanesulfonyl)imide, 1-propylpiperidinium bis(trifluoromethanesulfonyl)imide, 1-pentylpiperidinium bis(trifluoromethanesulfonyl)imide, 1,1-dibutylpiperidinium bis(trifluoromethanesulfonyl)imide, 1-propylpyrrolidinium bis(pentafluoroethanesulfonyl)imide, 1-pentylpyrrolidinium bis(pentafluoroethanesulfonyl)imide, 1,1-dimethylpyrrolidinium bis (pentafluoroethanesulfonyl)imide, 1-methyl-1-ethylpyrrolidinium bis(pentafluoroethanesulfonyl)imide, 1-methyl-1-propylpyrrolidinium bis(pentafluoroethanesulfonyl)imide, 1-methyl-1-butylpyrrolidinium bis(pentafluoroethanesulfonyl)imide, 1-methyl-1-pentylpyrrolidinium bis(pentafluoroethanesulfonyl)imide, 1-methyl-1-hexylpyrrolidinium bis(pentafluoroethanesulfonyl)imide, 1-methyl-1-heptylpyrrolidinium bis(pentafluoroethanesulfonyl)imide, 1,1-diethylpyrrolidinium bis (pentafluoroethanesulfonyl)imide, 1-ethyl-1-propylpyrrolidinium bis(pentafluoroethanesulfonyl)imide, 1-ethyl-1-butylpyrrolidinium bis(pentafluoroethanesulfonyl)imide, 1-ethyl-1-pentylpyrrolidinium bis(pentafluoroethanesulfonyl)imide, 1-ethyl-1-hexylpyrrolidinium bis(pentafluoroethanesulfonyl)imide, 1-ethyl-1-heptylpyrrolidinium bis(pentafluoroethanesulfonyl)imide, 1,1-dipropylpyrrolidinium bis(pentafluoroethanesulfonyl)imide, 1-propyl-1-butylpyrrolidinium bis(pentafluoroethanesulfonyl)imide, 1-propyl-1-pentylpyrrolidinium bis(pentafluoroethanesulfonyl)imide, 1-propyl-1-hexylpyrrolidinium bis(pentafluoroethanesulfonyl)imide, 1-propyl-1-heptylpyrrolidinium bis(pentafluoroethanesulfonyl)imide, 1,1-dibutylpyrrolidinium bis(pentafluoroethanesulfonyl)imide, 1-propylpiperidinium bis(pentafluoroethanesulfonyl)imide, 1-pentylpiperidinium bis(pentafluoroethanesulfonyl)imide, 1,1-dimethylpiperidinium bis(pentafluoroethanesulfonyl)imide, 1-methyl-1-ethylpiperidinium bis(pentafluoroethanesulfonyl)imide, 1-methyl-1-propylpiperidinium bis(pentafluoroethanesulfonyl)imide, 1-methyl-1-butylpiperidinium bis(pentafluoroethanesulfonyl)imide, 1-methyl-1-pentylpiperidinium bis(pentafluoroethanesulfonyl)imide, 1-methyl-1-hexylpiperidinium bis(pentafluoroethanesulfonyl)imide, 1-methyl-1-heptylpiperidinium bis(pentafluoroethanesulfonyl)imide, 1,1-diethylpiperidinium bis(pentafluoroethanesulfonyl)imide, 1-ethyl-1-propylpiperidinium bis(pentafluoroethanesulfonyl)imide, 1-ethyl-1-butylpiperidinium bis(pentafluoroethanesulfonyl)imide, 1-ethyl-1-pentylpiperidinium bis(pentafluoroethanesulfonyl)imide, 1-ethyl-1-hexylpiperidinium bis(pentafluoroethanesulfonyl)imide, 1-ethyl-1-heptylpiperidinium bis(pentafluoroethanesulfonyl)imide, 1,1-dipropylpiperidinium bis(pentafluoroethanesulfonyl)imide, 1-propyl-1-butylpiperidinium bis(pentafluoroethanesulfonyl)imide, 1-propyl-1-pentylpiperidinium bis(pentafluoroethanesulfonyl)imide, 1-propyl-1-hexylpiperidinium bis(pentafluoroethanesulfonyl)imide, 1-propyl-1-heptylpiperidinium bis(pentafluoroethanesulfonyl)imide, 1,1-dibutylpiperidinium bis(pentafluoroethanesulfonyl)imide, 2-methyl-1-pyrroline tetrafluoroborate, 1-ethyl-2-phenylindole tetrafluoroborate, 1,2-dimethylindole tetrafluoroborate, 1-ethylcarbazole tetrafluoroborate, 1-ethyl-3-methylimidazolium hexafluorophosphate, 1-ethyl-3-methylimidazolium tetrafluoroborate, 1-ethyl-3-methylimidazolium acetate, 1-ethyl-3-methylimidazolium trifluoroacetate, 1-ethyl-3-methylimidazolium heptafluorobutylate, 1-ethyl-3-methylimidazolium trifluoromethanesulfonate, 1-ethyl-3-methylimidazolium perfluorobutanesulfonate, 1-ethyl-3-methylimidazolium dicyanamide, 1-ethyl-3-methylimidazolium bis(trifluoromethanesulfonyl)imide, 1-ethyl-3-methylimidazolium bis(pentafluoroethanesulfonyl)imide, 1-ethyl-3-methylimidazolium tris(trifluoromethanesulfonyl)methide, 1-butyl-3-methylimidazolium tetrafluoroborate, 1-butyl-3-methylimidazolium hexafluorophosphate, 1-butyl-3-methylimidazolium trifluoroacetate, 1-butyl-3-methylimidazolium heptafluorobutylate, 1-butyl-3-methylimidazolium trifluoromethanesulfonate, 1-butyl-3-methylimidazolium perfluorobutanesulfonate, 1-butyl-3-methylimidazolium bis(trifluoromethanesulfonyl)imide, 1-hexyl-3-methylimidazolium bromide, 1-hexyl-3-methylimidazolium chloride, 1-hexyl-3-methylimidazolium tetrafluoroborate, 1-hexyl-3-methylimidazolium hexafluorophosphate, 1-hexyl-3-methylimidazolium trifluoromethanesulfonate, 1-octyl-3-methylimidazolium tetrafluoroborate, 1-octyl-3-methylimidazolium hexafluorophosphate, 1-hexyl-2,3-dimethylimidazolium tetrafluoroborate, 1,2-dimethyl-3-propylimidazolium bis(trifluoromethanesulfonyl)imide, 1-methylpyrazolium tetrafluoroborate, 3-methylpyrazolium tetrafluoroborate, 1-ethyl-2,3,5-trimethylpyrazolium bis(trifluoromethanesulfonyl)imide, 1-propyl-2,3,5-trimethylpyrazolium bis(trifluoromethanesulfonyl)imide, 1-butyl-2,3,5-trimethylpyrazolium bis(trifluoromethanesulfonyl)imide, 1-ethyl-2,3,5-trimethylpyrazolium bis(pentafluoroethanesulfonyl)imide, 1-propyl-2,3,5-trimethylpyrazolium bis(pentafluoroethanesulfonyl)imide, 1-butyl-2,3,5-trimethylpyrazolium bis(pentafluoroethanesulfonyl)imide, 1-ethyl-2,3,5-trimethylpyrazolium bis (trifluoromethanesulfonyl)trifluoroacetamide, 1-propyl-2,3,5-trimethylpyrazolium bis(trifluoromethanesulfonyl)trifluoroacetamide, 1-butyl-2,3,5-trimethylpyrazolium bis(trifluoromethanesulfonyl)trifluoroacetamide, N,N-dimethyl-N-ethyl-N-propylammonium bis(trifluoromethanesulfonyl)imide, N,N-dimethyl-N-ethyl-N-butylammonium bis(trifluoromethanesulfonyl)imide, N,N-dimethyl-N-ethyl-N-pentylammonium bis(trifluoromethanesulfonyl)imide, N,N-dimethyl-N-ethyl-N-hexylammonium bis(trifluoromethanesulfonyl)imide, N,N-dimethyl-N-ethyl-N-heptylammonium bis(trifluoromethanesulfonyl)imide, N,N-dimethyl-N-ethyl-N-nonylammonium bis(trifluoromethanesulfonyl)imide, N,N-dimethyl-N,N-dipropylammonium bis(trifluoromethanesulfonyl)imide, N,N-dimethyl-N-propyl-N-butylammonium bis(trifluoromethanesulfonyl)imide, N,N-dimethyl-N-propyl-N-pentylammonium bis(trifluoromethanesulfonyl)imide, N,N-dimethyl-N-propyl-N-hexylammonium bis(trifluoromethanesulfonyl)imide, N,N-dimethyl-N-propyl-N-heptylammonium bis(trifluoromethanesulfonyl)imide, N,N-dimethyl-N-butyl-N-hexylammonium bis(trifluoromethanesulfonyl)imide, N,N-dimethyl-N-butyl-N-heptylammonium bis(trifluoromethanesulfonyl)imide, N,N-dimethyl-N-pentyl-N-hexylammonium bis(trifluoromethanesulfonyl)imide, N,N-dimethyl-N,N-dihexylammonium bis(trifluoromethanesulfonyl)imide, trimethylheptylammonium bis(trifluoromethanesulfonyl)imide, N,N-diethyl-N-methyl-N-propylammonium bis(trifluoromethanesulfonyl)imide, N,N-diethyl-N-methyl-N-pentylammonium bis(trifluoromethanesulfonyl)imide, N,N-diethyl-N-methyl-N-heptylammonium bis(trifluoromethanesulfonyl)imide, N,N-diethyl-N-propyl-N-pentylammonium bis(trifluoromethanesulfonyl)imide, triethylpropylammonium bis(trifluoromethanesulfonyl)imide, triethylpentylammonium bis(trifluoromethanesulfonyl)imide, triethylheptylammonium bis(trifluoromethanesulfonyl)imide, N,N-dipropyl-N-methyl-N-ethylammonium bis(trifluoromethanesulfonyl)imide, N,N-dipropyl-N-methyl-N-pentylammonium bis(trifluoromethanesulfonyl)imide, N,N-dipropyl-N-butyl-N-hexylammonium bis(trifluoromethanesulfonyl)imide, N,N-dipropyl-N,N-dihexylammonium bis(trifluoromethanesulfonyl)imide, N,N-dibutyl-N-methyl-N-pentylammonium bis(trifluoromethanesulfonyl)imide, N,N-dibutyl-N-methyl-N-hexylammonium bis (trifluoromethanesulfonyl)imide, trioctylmethylammonium bis(trifluoromethanesulfonyl)imide, N-methyl-N-ethyl-N-propyl-N-pentylammonium bis(trifluoromethanesulfonyl)imide, 1-butylpyridinium (trifluoromethanesulfonyl)trifluoroacetamide, 1-butyl-3-methylpyridinium (trifluoromethanesulfonyl)trifluoroacetamide, 1-ethyl-3-methylimidazolium (trifluoromethanesulfonyl)trifluoroacetamide, tetrahexylammonium bis(trifluoromethanesulfonyl)imide, N,N-diethyl-N-methyl-N-(2-methoxyethyl)ammonium tetrafluoroborate, N,N-diethyl-N-methyl-N-(2-methoxyethyl)ammonium bis(trifluoromethanesulfonyl)imide, diallyldimethylammonium tetrafluoroborate, diallyldimethylammonium trifluoromethanesulfonate, diallyldimethylammonium bis(trifluoromethanesulfonyl)imide, diallyldimethylammonium bis(pentafluoroethanesulfonyl)imide, glycidyltrimethylammonium trifluoromethanesulfonate, glycidyltrimethylammonium bis(trifluoromethanesulfonyl)imide, glycidyltrimethylammonium bis(pentafluoroethanesulfonyl)imide, diallyldimethylammonium (trifluoromethanesulfonyl)trifluoroacetamide, glycidyltrimethylammonium (trifluoromethanesulfonyl)trifluoroacetamide, diallyldimethylammonium bis(pentafluoroethanesulfonyl)imide, diallyldimethyl bis(pentafluoroethanesulfonyl)imide, 1-octyl-3-methylimidazolium chloride, 1-decyl-3-methylimidazolium chloride, 1-dodecyl-3-methylimidazolium chloride, 1-tetradodecyl-3-methylimidazolium chloride, 1-hexadodecyl-3-methylimidazolium chloride, 1-hexyl-2,3-dimethylimidazolium bromide, 1-hexyl-2,3-dimethylimidazolium chloride, 1-butylpyridinium trifluoromethanesulfonate, 1-hexylpyridinium bromide, and 1-hexylpyridinium chloride.

In particular, the cyclic nitrogen onium cation component represented by Formula (A), (B), or (C) above is preferably used. When such a cyclic nitrogen onium cation component is used, the resulting pressure-sensitive adhesive composition (and pressure-sensitive adhesive layer), even with a low content of such a cation component, can more effectively reduce the peeling electrification voltage on the adherend. The cyclic cation may be aromatic or modified so that the unsaturated bond is saturated, or have a certain degree of saturation.

As the aforementioned ionic liquid, a commercially available ionic liquid may be used, or the liquid may be synthesized as described below.

A method of synthesizing an ionic liquid is not particularly limited as far as an objective ionic liquid is obtained. Generally, a halide method, a hydroxide method, an acid ester method, a chelate forming method, and a neutralization method described in the publication "Ionic liquid-The Front and Future of Development-" (published by CMC) are used.

Regarding a halide method, a hydroxide method, an acid ester method, a chelate forming method, and a neutralization method, a synthesis method using an example of a nitrogen-containing onium salt will be shown below, but other ionic liquid such as a sulfur-containing onium salt, and a phosphorus-containing onium salt can be obtained by the similar procedure.

The halide method is a method which is performed by a reaction shown in the following formulas (1) to (3). First, a tertiary amine and alkyl halide are reacted to obtain halide (Reaction Equation (1), as a halogen, chlorine, bromine or iodine is used).

The resulting halide is reacted with an acid (HA) having an anion structure ($A^-$) of an objective ionic liquid or a salt (MA, M is a cation forming a salt with an objective anion such as ammonium, lithium, sodium and potassium) of an objective ionic liquid to obtain an objective ionic liquid ($R_4NA$).

[Formula 6]

(1) $R_3N+RX \rightarrow R_4NX$ (X: Cl, Br, I)

(2) $R_4NX+HA \rightarrow R_4NA+HX$

(3) $R_4NX+MA \rightarrow R_4NA+MX$ (M: $NH_4$, Li, Na, K, Ag etc.)

The hydroxide method is a method performed by a reaction shown in (4) to (8). First, a halide ($R_4NX$) is subjected to ion exchange membrane method electrolysis (reaction equation (4)), an OH-type ion exchange resin method (reaction

equation (5)) or a reaction with silver oxide ($Ag_2O$) (reaction equation (6)) to obtain a hydroxide ($R_4NOH$) (as a halogen, chlorine, bromine or iodine is used).

The resulting hydroxide is subjected to a reaction of reaction equations (7) to (8) as in the aforementioned halide method to obtain an objective ionic liquid ($R_4NH$).

[Formula 7]

(4) $R_4NX+H_2O \rightarrow R_4NOH+1/2H_2+1/2X_2$ (X: Cl, Br, I)

(5) $R_4NX+P\text{-}OH \rightarrow R_4NOH+P\text{-}X$ (P-OH: OH-type ion exchange resin)

(6) $R_4NX+1/2Ag_2O+1/2H_2O \rightarrow R_4NOH+AgX$

(7) $R_4NOH+HA \rightarrow R_4NA+H_2O$

(8) $R_4NOH+MA \rightarrow R_4NA+MOH$ (M: $NH_4$, Li, Na, K, Ag etc.)

The acid ester method is a method performed by a reaction shown in (9) to (11). First, tertiary amine ($R_3N$) is reacted with acid ester to obtain an acid esterified substance (reaction equation (9), as acid ester, ester of an inorganic acid such as sulfuric acid, sulfurous acid, phosphoric acid, phosphorous acid, and carbonic acid, or ester of organic acid such as methanesulfonic acid, methylphosphonic acid and formic acid is used).

The resulting acid esterified substance is subjected to a reaction of reaction equations (10) to (11) as in the aforementioned halide method, to obtain an objective ionic liquid ($R_4NA$). Alternatively, as acid ester, methyl trifluoromethane sulfonate, or methyl trifluoroacetate may be used to directly obtain an ionic liquid.

[Formula 8]

(9) $R_3N+ROY \rightarrow R_4NOY$

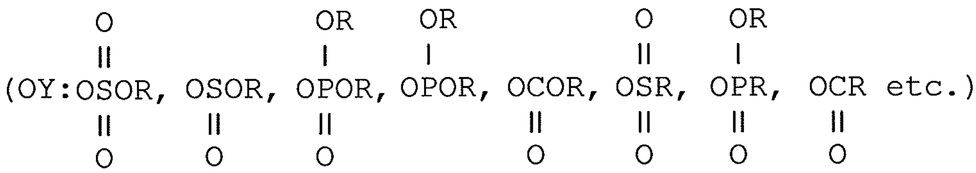

(10) $R_4NOY+HA \rightarrow R_4NA+HOY$

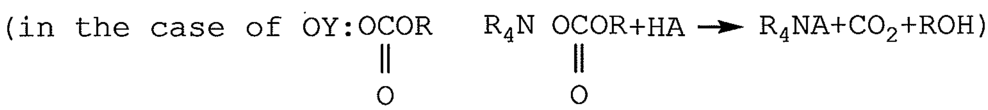


(11) $R_4NOY+MA \rightarrow R_4NA+MOY$ (M: $NH_4$, Li, Na, K, Ag etc.)

The chelate forming method is a method performed by a reaction as shown in (12) to (15). First, halide of quaternary ammonium ($R_4NX$), hydroxide of quaternary ammonium ($R_4NOH$), or carbonic acid esterified substance of quaternary ammonium ($R_4NOCO_2CH_3$) is reacted with hydrogen fluoride (HF) or ammonium fluoride ($NH_4F$) to obtain a quaternary ammonium fluoride salt (reaction equation (12) to (14)).

The resulting quaternary ammonium fluoride salt can be subjected to a chelate forming reaction with fluoride such as $BF_3$, $AlF_3$, $PF_5$, $ASF_5$, $SbF_5$, $NbF_5$ and $TaF_6$, to obtain an ionic liquid (reaction equation (15)).

[Formula 9]

(12) $R_4NX+HF \rightarrow R_4NF+HX$ (X: Cl, Br, I)

(13) $R_4NY+HF \rightarrow R_4NF+HY$ (Y: OH, $OCO_2CH_3$)

(14) $R_4NY+NH_4F \rightarrow R_4NF+NH_3+HY$ (Y: OH, $OCO_2CH_3$)

(15) $R_4NF+MF_{n-1} \rightarrow R_4NMF_n$

($MF_{n-1}$: $BF_3$, $AlF_3$, $PF_5$, $ASF_5$, $SbF_5$, $NbF_5$, $TaF_5$ etc.)

The neutralization method is a method performed by a reaction shown in (16). An ionic liquid can be obtained by reacting tertiary amine and an organic acid such as $HBF_4$, $HPF_6$, $CH_3COOH$, $CF_3COOH$, $CF_3SO_3H$, $(CF_3SO_2)_2NH$, $(CF_3SO_2)_3CH$, and $(C_2F_5SO_2)_2NH$.

[Formula 10]

(16) $R_3N+HZ \rightarrow R_3HN^+Z^-$

[HZ: $HBF_4$, $HPF_6$, $CH_3COOH$, $CF_3COOH$, $CF_3SO_3H$, $(CF_3SO_2)_2NH$, $(CF_3SO_2)_3CH$, $(C_2F_5SO_2)_2NH$ organic acid such as]

In the aforementioned (1) to (16), R represents hydrogen or a hydrocarbon group of a carbon number of 1 to 20, and may contain a hetero atom.

Based on 100 parts by weight of the base polymers (the total amount of the (meth)acryl-based polymer (a) and the (meth)acryl-based polymer (b)), the amount of the ionic compound is preferably from 0.01 to 10 parts by weight, more preferably from 0.03 to 6 parts by weight, even more preferably from 0.2 to 4 parts by weight, in particular, preferably from 0.3 to 1 part by weight. If it is less than 0.01 parts by weight, the resulting antistatic properties may be insufficient, and if it is more than 10 parts by weight, the risk of staining the adherend may tend to increase. The ionic compound is preferably an ionic liquid and/or an alkali metal salt, more preferably an ionic liquid.

When an ionic liquid is used as the ionic compound, the amount of the ionic liquid is preferably from 0.01 to 10 parts by weight, more preferably from 0.02 to 10 parts by weight, even more preferably from 0.03 to 4.9 parts by weight, in particular, preferably from 0.05 to 2 parts by weight, based on 100 parts by weight of the base polymers (the total amount of the (meth)acryl-based polymer (a) and the (meth)acryl-based polymer (b)), though the amount of the ionic liquid depends on the compatibility between the ionic compound and the polymers used and therefore cannot be universally defined. If it is less than 0.01 parts by weight, the resulting antistatic properties may be insufficient, and if it is more than 10 parts by weight, the risk of staining the adherend may tend to increase.

When an alkali metal salt is used as the ionic compound, in general, the amount of the alkali metal salt is preferably from 0.01 to 10 parts by weight, more preferably from 0.01 to 4.9 parts by weight, even more preferably from 0.02 to 1.9 parts by weight, still more preferably from 0.03 to 0.9 parts by weight, in particular, preferably from 0.04 to 0.09 parts by weight, based on 100 parts by weight of the base polymers, though the amount of the alkali metal salt depends on the compatibility between the ionic compound and the polymers used and therefore cannot be universally defined. If it is less than 0.01 parts by weight, the resulting antistatic properties may be insufficient, and if it is more than 10 parts by weight, the risk of staining the adherend may tend to increase.

In an embodiment of the invention, the (meth)acryl-based polymer (a) containing, as a monomer unit, the reactive surfactant represented by Formula (I) below is used as a base polymer.

[Formula 11]

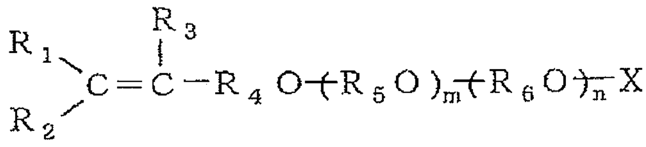

(I)

In Formula (I), $R_1$, $R_2$, and $R_3$ are the same or different and each represent hydrogen or a methyl group, $R_4$ represents an alkylene group of 0 to 30 carbon atoms, wherein alkylene of 0 carbon atoms means the absence of $R_4$, $R_5$ and $R_6$ are the same or different and each represent an alkylene group of 1 to 30 carbon atoms, m represents an integer of 0 to 50, n represents an integer of 0 to 100, provided that m + n is an integer of 1 to 150, and X represents hydrogen or an anionic hydrophilic group.

The (meth)acryl-based polymer (a) for use in an embodiment of the invention may be any (meth)acryl-based polymer having adherability and corresponding to any of those shown above.

In the reactive surfactant represented by Formula (I), $R_4$ preferably represents an alkylene group of 0 to 10 carbon atoms, in particular, preferably an alkylene group of 0 to 4 carbon atoms. It should be noted that the case where the number of carbon atoms is 0 means that $R_4$ is absent.

Examples of the alkylene group of 1 to 4 carbon atoms include a methylene group, an ethylene group, a 1,2-propylene group, a 1,3-propylene group, a dimethylmethylene group, a 1,2-butylene group, a 2,3-butylene group, a 1,3-butylene group, a 1,4-butylene group, and an isobutylene group.

In the reactive surfactant represented by Formula (I), $R_5$ preferably represents an alkylene group of 2 to 20 carbon atoms, in particular, preferably an alkylene group of 3 to 18 carbon atoms or an alkoxymethylethylene group represented by Formula (II) or (III) below. The use of the reactive surfactant having an alkylene group of 3 to 18 carbon atoms or an alkoxymethylethylene group represented by Formula (II) or (III) below is preferred because it further improves the balanced compatibility with the ionic compound and facilitates the simultaneous achievement of antistatic properties and a low risk of staining the adherend.

[Formula 12]

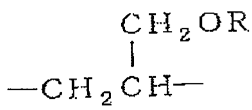

(II)

In Formula (II), R represents an alkyl group of 1 to 18 carbon atoms.

[Formula 13]

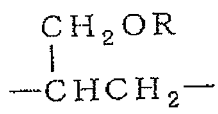

(III)

In Formula (III), R represents an alkylene group of 1 to 18 carbon atoms.

Examples of the alkylene group of 3 to 18 carbon atoms include a 1,2-propylene group, a 1,3-propylene group, a 1,2-butylene group, a 2,3-butylene group, a 1,3-butylene group, a 1,4-butylene group, an isobutylene group, a pentylene group, a hexylene group, a heptylene group, an octylene group, a nonylene group, a decylene group, a dodecylene group, a tetradecylene group, a hexadecylene group, and an octadecylene group.

Examples of the alkyl group of 1 to 18 carbon atoms include a methyl group, an ethyl group, a propyl group, a 2-methylpropyl group, a n-butyl group, a sec-butyl group, a tert-butyl group, an isobutyl group, a pentyl group, a 3-methylpentyl group, a hexyl group, a 2-ethylhexyl group, a heptyl group, an octyl group, a nonyl group, a decyl group,

a tetradecyl group, a hexadecyl group, and an octadecyl group.

In the reactive surfactant represented by Formula (I), $R_6$ preferably represents an alkylene group of 1 to 4 carbon atoms, in particular, preferably an ethylene group of two carbon atoms.

In the reactive surfactant represented by Formula (I), m ($R_5O$) groups and n ($R_6O$) groups may be linked in either a block manner or a random manner or in a combination of a block manner and a random manner. When linked in a block manner, the ($R_5O$) group and the ($R_6O$) group may be arranged in any order. The m ($R_5O$) groups may be the same or different, and different ($R_5O$) groups may be linked in either a block manner or a random manner or in a combination of a block manner and a random manner.

The number m represents the average addition mole number of the oxyalkylene groups or the alkoxymethyloxyethylene groups, which is an integer in the range of 0 to 50, preferably in the range of 0 to 40, in particular, preferably in the range of 0 to 20.

The number n represents the average addition mole number of the oxyalkylene groups, which is an integer in the range of 0 to 100, preferably in the range of 1 to 70, in particular, preferably in the range of 5 to 50.

In addition, m and n are not simultaneously 0, and m + n is an integer of 1 to 150.

In the reactive surfactant represented by Formula (I), X represents hydrogen or an anionic hydrophilic group.

For example, the anionic hydrophilic group may be a group represented by Formula (IV) or (V) below.

[Formula 14] $-SO_3M_1$ (IV)

In Formula (IV), $M_1$ represents hydrogen, an alkali metal, an alkaline earth metal, an ammonium group, or an alkanolammonium group.

[Formula 15]

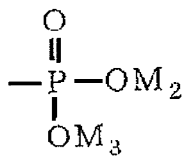

(V)

In Formula (V), $M_2$ and $M_3$ are the same or different and each represent hydrogen, an alkali metal, an alkaline earth metal, an ammonium group, or an alkanolammonium group.

Examples of the reactive surfactant include LATEMUL PD-104 (manufactured by Kao Corporation), LATEMUL PD-420 (manufactured by Kao Corporation), LATEMUL PD-430 (manufactured by Kao Corporation), and LATEMUL PD-450 (manufactured by Kao Corporation).

These reactive surfactants may be used alone or in combination of two or more, and the content of the reactive surfactant(s) is from 0.01 to 20% by weight, preferably from 0.05 to 10% by weight, more preferably from 0.1 to 5% by weight, based on the amount of all monomer components of the (meth)acryl-based polymer (a). If the content of the reactive surfactant is less than 0.01% by weight, the ionic compound bleeding-suppressing effect of the invention and the effect of reducing the staining of the protected material may be sometimes insufficient, which is not preferred. If the content is more than 20% by weight, the ionic compound bleeding-suppressing effect will be high so that the antistatic effect will be low, which is also not preferred.

In an embodiment of the invention, the reactive surfactant-free (meth)acryl-based polymer (b) is used as another base polymer. The blend of the (meth)acryl-base polymer (a) and the (meth)acryl-base polymer (b) can form a pressure-sensitive adhesive composition that not only makes it possible to prevent static buildup during the process of peeling off the non-antistatic adherend and to suppress the peeling electrification voltage and the risk of staining the adherend, but also has a high level of adhesion reliance and re-peeling properties without causing lifting or peeling.

The pressure-sensitive adhesive composition of the invention preferably has a weight ratio of the (meth)acryl-based polymer (a) to the (meth)acryl-based polymer (b) ((a) : (b)) of 60 : 40 to 10 : 90, more preferably 50 : 50 to 25 : 75, in particular, preferably 35 : 65 to 25 : 75. The blend with the above weight ratio can form a pressure-sensitive adhesive composition that not only makes it possible to prevent static buildup during the process of peeling off the non-antistatic adherend and to suppress the peeling electrification voltage and the risk of staining the adherend, but also has a high level of adhesion reliance and re-peeling properties without causing lifting or peeling. The blend is also useful because when it is used to form a surface protecting film, lifting or peeling can be suppressed, so that workability such as punching quality can be improved and that lifting or peeling caused by end face polishing can be suppressed in the

manufacturing process.

When the (meth) acryl-based polymers (a) and (b) are formed according to the invention, a (meth)acrylate having an alkyl group of 1 to 14 carbon atoms or any other polymerizable monomer component for controlling the glass transition temperature (Tg) or peeling properties of the (meth)acryl-based polymers (a) and (b) may also be used.

Specific examples of (meth)acrylate having an alkyl group of a carbon number of 1 to 14 include methyl (meth) acrylate, ethyl (meth)acrylate, n-butyl (meth)acrylate, s-butyl (meth)acrylate, t-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth) acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate, or the like.

In particular, examples that are preferably used for the surface protecting film according to the invention include n-butyl (meth)acrylate, sec-butyl (meth)acrylate, tert-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, and isodecyl (meth)acrylate.

The (meth)acrylates having an alkyl group of 1 to 14 carbon atoms may be used alone or in combination of two or more, and the content of the (meth)acrylate(s) having an alkyl group of 1 to 14 carbon atoms in all monomer components of the (meth)acryl-based polymer (a) is preferably from 80 to 99.99% by weight, more preferably from 90 to 99.95% by weight, in particular, preferably from 95 to 99.9% by weight. The content of the (meth)acrylate(s) having an alkyl group of 1 to 14 carbon atoms in all monomer components of the (meth)acryl-based polymer (b) is preferably from 50 to 99.99% by weight, more preferably from 60 to 99% by weight, in particular, preferably from 70 to 96% by weight. When the (meth)acrylate having an alkyl group of 1 to 14 carbon atoms is used, good interaction with the ionic compound and good tackiness can be provided by appropriate adjustment.

Other polymerizable monomer components such as polymerizable monomers for controlling the glass transition temperature or the peeling properties of the (meth)acryl-based polymers (a) and (b) may also be used as long as the effects of the invention are not impaired.

As other polymerizable monomer component, a cohesive strength or a heat resistance improving component such as a sulfonic acid group-containing monomer, a phosphoric acid group-containing monomer, a cyano group-containing monomer, vinyl esters, and an aromatic vinyl compound, and a component having a functional group working for improving an adhering force or for a crosslinking point, such as a carboxyl group-containing monomer, an acid anhydride group-containing monomer, a hydroxyl group-containing monomer, an amido group-containing monomer, an amino group-containing monomer, an imido group-containing monomer, an epoxy group-containing monomer, N-acryloylmorpholine, vinyl ethers can be appropriately used. Other components may be used alone, or two or more of them may be used by mixing.

When a (meth)acrylate having an acid functional group such as a carboxyl group, a sulfonate group, or a phosphate group is used, the acid value of the (meth)acryl-based polymers (a) and (b) is preferably adjusted to 29 or less, more preferably 10 or less, in particular, preferably 1 or less. When the (meth)acryl-based polymers (a) and (b) have an acid value of more than 29, the antistatic properties may tend to undesirably decrease.

An acid value can be adjusted by an amount of (meth)acrylate having an acid functional group to be blended, and examples thereof include a (meth)acryl-based polymer obtained by copolymerizing 2-ethylhexyl acrylate as a (meth) acryl-based polymer having a carboxyl group, and acrylic acid. In this case, by adjusting acrylic acid at 3.7 parts by weight relative to a total of 100 parts by weight of 2-ethylhexyl acrylate and acrylic acid, the aforementioned acid value can be satisfied.

Examples of the sulfonic acid group-containing monomer include styrenesulfonic acid, allylsulfonic acid, 2-(meth)acrylamido-2-methylpropanesulfonic acid, (meth)acrylamidopropanesulfonic acid, sulfopropyl (meth)acrylate, (meth)acryloyloxynaphthalenesulfonic acid, and sodium vinylsulfonate.

Examples of the phosphoric acid group-containing monomer include 2-hydroxyethylacryloyl phosphate.

Examples of the cyano group-containing monomer include acrylonitrile and methacrylonitrile.

Examples of vinylesters include vinyl acetate, vinyl propionate, and vinyl laurate.

Examples of the aromatic vinyl compound include styrene, chlorostyrene, chloromethylstyrene, $\alpha$-methylstyrene, and other substituted styrene.

Examples of the carboxyl group-containing monomer include (meth)acrylic acid, carboxyethyl (meth)acrylate, carboxypentyl (meth)acrylate, itaconic acid, maleic acid, fumaric acid, crotonic acid, and isocrotonic acid.

Examples of the acid anhydride group-containing monomer include maleic acid anhydride, itaconic acid anhydride, and an acid anhydride of the aforementioned carboxyl group-containing monomer.

Examples of the hydroxyl group-containing monomer include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol (meth)acrylamide, vinyl alcohol, allyl alcohol, 2-hydroxyethyl vinyl ether, 4-hydroxybutylvinyl ether, and diethylene glycol monovinyl ether.

Examples of the amido group-containing monomer include acrylamide, methacrylamide, diethylacrylamide, N-vinylpyrrolidone, N, N-dimethylacrylamide, N, N-dimethylmethacrylamide, N, N-diethylacrylamide, N, N-diethylmethacrylamide, N, N'-methylenebisacrylamide, N, N-dimethylaminopropylacrylamide, N, N-dimethylaminopropylmethacrylamide, and diacetoneacrylamide.

Examples of the amino group-containing monomer include aminoethyl (meth)acrylate, N, N-dimethylaminoethyl (meth)acrylate, N, N-dimethylaminopropyl (meth)acrylate, and (meth)acryloylmorpholine.

Examples of the imido group-containing monomer include cyclohexylmaleimide, isopropylmaleimide, N-cyclohexylmaleimide, and itaconeimide.

Examples of the epoxy group-containing monomer include glycidyl (meth)acrylate, methylglycidyl (meth)acrylate, and allyl glycidyl ether.

Examples of vinyl ethers include methyl vinyl ether, ethyl vinyl ether, and isobutyl vinyl ether.

The above other polymerizable monomer components may be used alone or in combination of two or more. The total content of other polymerizable monomer components in all monomer components of the (meth)acryl-based polymer (a) is preferably from 0 to 49.99% by weight, more preferably from 0.5 to 40% by weight, even more preferably from 0.8 to 30% by weight, in particular, preferably from 1 to 20% by weight. The total content of other polymerizable monomer components in all monomer components of the (meth)acryl-based polymer (b) is preferably from 0 to 49.99% by weight, more preferably from 0.5 to 40% by weight, even more preferably from 0.8 to 30% by weight, in particular, preferably from 1 to 20% by weight. When any of the above other polymerizable monomer components are used, good interaction with the ionic compound and good tackiness can be provided by appropriate adjustment.

The (meth)acryl-based polymers (a) and (b) for use in an embodiment of the invention each preferably has a weight average molecular weight of 200,000 to 1,000,000, more preferably 250,000 to 800,000, in particular, preferably 300,000 to 600,000. If the weight average molecular weight is less than 200,000, the pressure-sensitive adhesive composition may have low cohesive strength, so that it may tend to cause adhesive deposit. On the other hand, if the weight average molecular weight is more than 1,000,000, the polymers may have relatively low flowability, so that they may have poor wettability to a polarizing plate, which may tend to cause bulging between the polarizing plate and the pressure-sensitive adhesive composition layer of a surface protecting film. The weight average molecular weight refers to the value measured by GPC (gel permeation chromatography).

The (meth)acryl-based polymers (a) and (b) used as base polymers each generally have a glass transition temperature (Tg) of -100°C or more, preferably -90°C to 0°C, more preferably -80°C to -10°C. If the glass transition temperature is higher than 0°C, the polymers may be less likely to flow, so that they may have poor wettability to a polarizing plate, which may tend to cause bulging between the polarizing plate and the pressure-sensitive adhesive composition layer of a surface protecting film. The glass transition temperature (Tg) of the (meth)acryl-based polymers (a) and (b) can be adjusted within the above range by appropriately changing the monomer components to be used and the composition ratio. The glass transition temperature (Tg) of the (meth)acryl-based polymers (a) and (b) can also be adjusted within the above range by appropriately changing the monomer components to be used and the composition ratio thereof.

In an embodiment of the invention, the (meth)acryl-based polymers (a) and (b) may be obtained by a polymerization method that is generally used to synthesize acryl-based polymers, such as solution polymerization, emulsion polymerization, bulk polymerization, or suspension polymerization. The resulting polymers may each be any type of copolymer such as a random copolymer, a block copolymer, or a graft copolymer.

When the (meth)acryl-based polymers (a) and (b) are crosslinked as appropriate, the pressure-sensitive adhesive composition of the invention can form a pressure-sensitive adhesive sheet with improved heat resistance or weather resistance. Examples of a specific means for a crosslinking method include a so-called method of using a crosslinking agent, in which a compound having a group reactive with a carboxyl group, a hydroxyl group, an amino group, an amido group, which is appropriately contained as a crosslinking basal point in a (meth)acrly-based polymer such as an isocyanate compound, an epoxy compound, a melanine-based resin and an aziridine compound is added to react them. Among them, from a viewpoint mainly of obtaining an appropriate cohesive strength, an isocyanate compound and an epoxy compound are particularly preferably used. These compounds may be used alone, or may be used by mixing two or more kinds of them.

Among them, examples of the isocyanate compound include aromatic isocyanate such as tolylene diisocyanate, and xylene diisocyanate, alicycilc isocyanate such as isophorone diisocyanate and aliphatic isocyanate such as hexamethylene diisocyanate.

More specific examples of the isocyanate compound include lower aliphatic polyisocyanates such as butylene diisocyanate, and hexamethylene diisocyanate, alicyclic isocyanates such as cyclopentylene diisocyanate, cyclohexylene diisocyanate, and isophorone diisocyanate, aromatic diisocyanates such as 2,4-tolylene diisocyanate, 4,4'-diphenylmethane diisocyanate, and xylene diisocyanate, and isocyanate adducts such as trimethylolpropane/tolylene diisocyanate trimer adduct (trade name: Coronate L manufactured by Nippon Polyurethane Industry Co., Ltd.), trimethylolpropane/hexamethylene diisocyanate trimer adduct (trade name: Coronate HL manufactured by Nippon Polyurethane

Industry Co., Ltd.), and isocyanurate of hexamethylene diisocyanate (trade name: Coronate HX manufactured by Nippon Polyurethane Industry Co., Ltd.). These isocyanate compounds may be used alone, or may be used by mixing two or kinds of them.

Examples of the epoxy compound include N,N,N',N'-tetraglycidyl-m-xylenediamine (trade name TETRAD-X manufactured by Mitsubishi Gas Chemical Company, Inc.) and 1,3-bis(N,N-diglycidylaminomethyl)cyclohexane (trade name TETRAD-C manufactured by Mitsubishi Gas Chemical Company Inc.). These compounds may be used alone, or may be used by mixing two or more kinds.

Examples of the melamine-based resin include hexamethylolmelamine.

Examples of the aziridine derivative include trade name HDU, trade name TAZM, and trade name TAZO (all manufactured by Sogo Pharmaceutical Co., Ltd.) as a commercially available product. These compounds may be used alone, or may be used by mixing two or more kinds.

The amount of any of these crosslinking agents to be used may be appropriately selected depending on the balance with the (meth)acryl-based polymer to be crosslinked and the intended use of the pressure-sensitive adhesive sheet. To achieve sufficient heat resistance based on the cohesive strength of the acrylic pressure-sensitive adhesive, the crosslinking agent is preferably added in an amount of 0.01 to 15 parts by weight, more preferably 0.5 to 10 parts by weight, even more preferably 0.5 to 5 parts by weight, based on 100 parts by weight of the total of the (meth)acryl-based polymers (a) and (b). If the content is less than 0.01 parts by weight, the crosslinking agent may form cross-links insufficiently so that the pressure-sensitive adhesive composition may have low cohesive strength, which may result in insufficient heat resistance or tend to cause adhesive deposit. If the content is more than 15 parts by weight, the polymers may have high cohesive strength so that their flowability may decrease, which may make the wettability to the adherend insufficient and tend to cause peeling.

Alternatively, a polyfunctional monomer containing two or more radiation-reactive unsaturated bonds as a substantial crosslinking agent is added, and this may be crosslinked with radiation.

As the polyfunctional monomer having two or more radiation-reactive unsaturated bonds, a polyfunctional monomer component having two or more of one kind or two or more kinds radiation-reactive groups which can be crosslinking-treated (cured) by irradiation of radiation, such as a vinyl group, an acryloyl group, a methacryloyl group, and a vinylbenzyl group is used. Generally, a component having 10 or less of radiation-reactive unsaturated bonds is suitably used. Two or more kinds of the polyfunctional monomer may be used by mixing.

Examples of the polyfunctinal monomer include ethylene glycol di(meth)acrylate, diethlene glycol di(meth) acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, divinylbenzene, and N,N'-methylenebisacrylamide.

The amount of the polyfunctional monomer to be used may be appropriately selected depending on the balance with the (meth)acryl-based polymer to be crosslinked and the intended use of the pressure-sensitive adhesive sheet. To achieve sufficient heat resistance based on the cohesive strength of the acrylic pressure-sensitive adhesive, the polyfunctional monomer is preferably added in an amount of 0.1 to 30 parts by weight, more preferably 0.5 to 10 parts by weight, based on 100 parts by weight of the total of the (meth)acryl-based polymers (a) and (b). If the content is less than 0.1 parts by weight, the resulting acryl-based pressure-sensitive adhesive may have insufficient cohesive strength, and if the content is more than 30 parts by weight, an undesirable problem with flexibility or tackiness may occur.

Examples of radiation include ultraviolet ray, laser ray, $\alpha$ ray, $\beta$ ray, $\gamma$ ray, X-ray, and electron beam. From a viewpoint of controlling property and better handling property and a cost, ultraviolet ray is suitably used. More preferably, ultraviolet ray having a wavelength of 200 to 400nm is used. Ultraviolet ray can be irradiated using an appropriate light source such as a high pressure mercury lamp, a micro-wave excitation-type lamp, and a chemical lamp. When ultraviolet ray is used as irradiation, a photopolymerization initiator is added to an acryl pressure-sensitive adhesive layer.

The photopolymerization initiator depends on a kind of a radiation-reactive component, and may be a substance which produces a radical or a cation by irradiating ultraviolet ray having an appropriately wavelength which can trigger the polymerization reaction.

Example of the photoradical polymerization initiator include benzoins such as benzoin, benzoin methyl ether, benzoin ethyl ether, methyl o-benzoylbenzoate-p-benzoin ethyl ether, benzoin isopropyl ether, and $\alpha$-methylbenzoin, acetophenes such as benzylmethylketal, trichloroacetophenone, 2,2-diethoxyacetophenone, and 1-hydroxycyclohexyl phenyl ketone, propiophenones such as 2-hydroxy-2-methylpropiophenone, and 2-hydroxy-4'-isopropyl-2-methylpropiophenone, benzophenones such as benzophenone, methylbenzophenone, p-chlorobenzophenone, and p-dimethylaminobenzophenone, thioxanthons such as 2-chlorothioxanthon, 2-ethylthioxanthon, and 2-isopropylthioxanthon, acylphosphine oxides such as bis(2,4,6-trimethylbenzoyl)-phenylphosphine oxide, 2,4,6-trimethylbenzoyldiphenylphosphine oxide, and (2,4,6-trimethylbenzoyl)-(ethoxy)-phenylphosphine oxide, benzil, dibenzsuberone, and $\alpha$-acyloxime ether.

Examples of a photocation polymerization initiator include onium salts such as an aromatic diazonium salt, an aromatic iodonium salt, and an aromatic sulfonium salt, organometallic complexes such as an ion-allene complex. a titanocene complex, and an aryl silanol-aluminum complex, nitrobenzyl ester, sulfonic acid derivative, phosphoric acid

ester, phenolsulfonic acid ester, diazonaphthoquinone, and N-hydroxymidosulfonate. Two or more kinds of the photopolymerization initiators may be used by mixing.

The photopolymerization initiator is generally added in an amount of 0.1 to 10 parts by weight, preferably 0.2 to 7 parts by weight, based on 100 parts by weight of the total of the (meth)acryl-based polymers (a) and (b).

Further, it is also possible to use a photoinitiation polymerization assistant such as amines. Examples of the photoinitiation assistant include 2-dimethylaminoethyl benzoate, diemethylaminoacetophenone, p-dimethylaminobenzoic acid ethyl ester, and p-dimethylaminobenzoic acid isoamyl ester. Two or more kinds of the photopolymerization initiation assistants may be used. It is preferably that the polymerization initiation assistant is blended at 0.05 to 10 parts by weight, further 0.1 to 7 parts by weight relative to 100 parts by weight a (meth)acryl-based polymer.

Further, the previously known tackifiers, or the previously known various additives such as a surface lubricant agent, a leveling agent, an antioxidant, a corrosion preventing agent, a photo stabilizer, an ultraviolet absorbing agent, a polymerization inhibitor, a silane coupling agent, and a powder, a particle, and a foil of inorganic or organic filer, metal powder and pigment may be appropriately added to the pressure-sensitive adhesive composition used in the pressure-sensitive adhesive sheet of the present invention depending on utility.

On the other hand, the pressure-sensitive adhesive layer of the invention is preferably formed by crosslinking the pressure-sensitive adhesive composition as described above. The crosslinking of the pressure-sensitive adhesive composition is generally performed after the application of the pressure-sensitive adhesive composition. Alternatively, a pressure-sensitive adhesive layer including the crosslinked pressure-sensitive adhesive composition may also be transferred onto a support (film) or the like.

When a photopolymerization initiator as an arbitrary component is added as described above, a pressure-sensitive adhesive layer can be obtained by coating the pressure-sensitive adhesive composition directly on a subject to be protected, or coating on one side or both sides of a supporting substrate, and performing light irradiation. Usually, a pressure-sensitive adhesive layer is used by photopolymerization by irradiating with ultraviolet ray having an irradiance of 1 to 200mW/cm$^2$ at a wavelength of 300 to 400nm, at an expose dose of around 200 to 4000mJ/cm$^2$.

The pressure-sensitive adhesive sheet of the invention preferably includes a support and a pressure-sensitive adhesive layer formed on one or both sides of the support by crosslinking the pressure-sensitive adhesive composition. The pressure-sensitive adhesive sheet of the invention, which has the pressure-sensitive adhesive layer formed by crosslinking the pressure-sensitive adhesive composition with the advantageous effects described above, prevents static buildup on the non-antistatic adherend when peeled off, is reduced in the risk of staining the adherend, and has a high level of adhesion reliance and re-peeling properties without causing lifting or peeling.

The pressure-sensitive adhesive layer may be formed on the support (film) by any appropriate method. For example, the pressure-sensitive adhesive layer is formed on the support (film) by a process including applying the pressure-sensitive adhesive composition to the support (film) and removing the polymerization solvent and the like by drying. Subsequently, aging may be performed for a purpose such as control of migration of the components of the pressure-sensitive adhesive layer or control of the crosslinking reaction. When the pressure-sensitive adhesive composition is applied to the support to form a pressure-sensitive adhesive sheet, one or more solvents other than the polymerization solvent may also be newly added to the composition so that the composition can be uniformly applied to the support.

In addition, as a method of forming the pressure-sensitive adhesive layer of the present invention, the known method used for preparing pressure-sensitive adhesive sheet is used. Specifically, examples include roll coating, gravure coating, reverse coating, roll brushing, spray coating, and air knife coating methods, immersing and curtain coating method, and extruding coating method with a die coater.

Pressure-sensitive adhesive sheets of the present invention are such that the aforementioned pressure-sensitive adhesive layer is coated on one side or both sides of various supports comprising a plastic film such as a polyester film, or a porous material such as a paper and a non-woven fabric at a thickness of usually 3 to 100μm, preferably around 5 to 50μm, to form an aspect of a sheet or a tape. In particular, it is preferable to use a plastic substrate as a support in a case of a surface protecting film.

The plastic substrate is not particularly limited as far as it can be formed into a sheet or a film, and examples include a polyolefin film such as polyethylene, polypropylene, poly-1-butene, poly-4-methyl-1-pentene, a polybutadiene film, a polymethylpentene film, an ethylene·propylene copolymer, an ethylene·1-butene copolymer, an ethylene·vinyl acetate copolymer, an ethylene·ethyl acrylate copolymer, and an ethylene·vinyl alcohol copolymer, a polyester film such as polyethylene terephthalate, polyethylene naphthalate, and polybutylene terephthalate, a polyacrylate film, a polyurethane film, a polystyrene film, a polyamide film such as nylon 6, nylon 6,6, and partially aromatic polyamide, a polyvinyl chloride film, a vinyl chloride copolymer film, a polyvinylidene chloride film, and a polycarbonate film.

A thickness of the film is usually 5 to 200 μm, preferably around 10 to 100 μm.

The plastic substrate may be subjected to releasing, anti-staining or acid treatment with silicone, fluorine, long chain alkyl-based or fatty acid amide-based releasing agent, or a silica powder, easy adhesion treatment such as alkali treatment, primer treatment, corona treatment, plasma treatment, and ultraviolet ray treatment, or coating-type, kneading-type, or deposition-type antistatic treatment, if necessary.

The surface protecting film of the invention preferably includes: a support including an antistatic-treated plastic base material; and a pressure-sensitive adhesive layer formed on one or both sides of the support by crosslinking the pressure-sensitive adhesive composition. When an antistatic treatment is performed on the plastic base material, the peeling electrification voltage on the adherend can be more effectively reduced, so that a product with higher antistatic performance can be obtained.

Any antistatic treatment may be performed on the plastic base material (support). For example, the antistatic treatment may be performed using a method of providing an antistatic layer on at least one side of a general-use film or a method of kneading a kneading-type antistatic agent into a plastic film.

Examples of the method of providing an antistatic layer on at least one side of the support (film) include a method of applying an antistatic resin composed of an antistatic agent and a resin component, a conductive polymer, or a conductive substance-containing conductive resin, and a method of vapor-depositing or plating a conductive substance.

Examples of an electrification preventing agent contained in an electrification preventing resin include a cation-type electrification preventing agent having a cationic functional group such as a quaternary ammonium salt, a pyridinium salt, and a primary, secondary or tertiary amino group, an anion-type electrification preventing agent having an anionic functional group such as a sulfonic acid salt, a sulfuric acid ester salt, a phosphonic acid salt, and a phosphoric ester salt, an amphoteric-type electrification preventing agent such as alkylbetain and a derivative thereof, imidazoline and a derivative thereof, and alanine and a derivative thereof, a nonion-type electrification preventing agent such as glycerin and a derivative thereof, and polyethylene glycol and a derivative thereof, and an ionic electrically conductive polymer obtained by polymerizing or copolymerizing a monomer having the aforementioned cation-type, anion-type, or amphoteric-type ionic electrically conductive group. These compounds may be used alone, or two or more of them may be used by mixing.

Specifically, examples of the cation-type electrification preventing agent include a (meth)acrylate copolymer having a quaternary ammonium group such as an alkyl trimethylammmonium salt, acyloylamidopropyltrimethtylammonium methosulfate, an alkylbenzylmethylammonium salt, acyl choline chloride, and polydimethylaminoethyl methacrylate, a styrene copolymer having a quaternary ammonium group such as polyvinylbenzyltrimethylammonium chloride, and a diallylamine copolymer having a quaternary ammonium group such as polydiallyldimethylammonium chloride. The compounds may be used alone, or two or more kinds may be used by mixing.

Examples of the anion-type electrification preventing agent include an alkyl sulfonic acid salt, an alkylbenzenesulfonic acid salt, an alkyl sulfate ester salt, an alkyl ethoxy sulfate ester salt, an alkyl phosphate ester salt, and a sulfonic acid group-containing styrene copolymer. These compounds may be used alone, or two or more kinds may be used by mixing.

Examples of the amphoteric-type electrification preventing agent include alkylbetain, alkylimidazoliumbetain, and carbobetaingrafted copolymer. These compounds may be used alone, or two or more kinds may be used by mixing.

Examples of the nonion-type electrification preventing agent include fatty acid alkylolamide, di(2-hydroxyethyl) alkylamine, polyoxyethylenealkylamine, fatty acid glycerin ester, polyoxyethylene glycol fatty acid ester, sorbitan fatty acid ester, polyoxysorbitan fatty acid ester, polyoxyethylene alkyl phenyl ether, polyoxyethylene alkyl ether, polyethylene glycol, polyoxyethylenediamine, a copolymer consisting of polyether, polyester and polyamide, and methoxypolyethyleneglycol (meth)acrylate. These compounds may be used alone, or two or more kinds may be used by mixing.

Examples of the electrically conductive polymer include polyaniline, polypyrrole and polythiophene. These electrically conductive polymers may be used alone, or two or more kinds may be used by mixing.

Examples of the electrically conductive substance include tin oxide, antimony oxide, indium oxide, cadmium oxide, titanium oxide, zinc oxide, indium, tin, antimony, gold, silver, copper, aluminum, nickel, chromium, titanium, iron, covert, copper iodide, and an alloy and a mixture thereof. These electrically conductive substances may be used alone, or two or more kinds may be used by mixing.

As a resin component used in the electrification preventing resin and the electrically conductive resin, a generally used resin such as polyester, acryl, polyvinyl, urethane, melanine and epoxy is used. In the case of a polymer-type electrification preventing agent, it is not necessary that a resin component is contained. In addition, the electrification preventing resin component may contain compounds of a methylolated or alkylolated melanine series, a urea series, a glyoxal series, and an acrylamide series, an epoxy compound, or an isocyanate compound as a crosslinking agent.

An electrification preventing layer is formed, for example, by diluting the aforementioned electrification preventing resin, electrically conductive polymer or electrically conductive resin with a solvent such as an organic solvent and water, and coating this coating solution on a plastic film, followed by drying.

Examples of an organic solvent used in formation of the electrification preventing layer include methyl ethyl ketone, acetone, ethyl acetate, tetrahydrofuran, dioxane, cyclohexanone, n-hexane, toluene, xylene, methanol, ethanol, n-propanol and isopropanol. These solvents may be used alone, or two or more kinds may be used by mixing.

As a coating method in formation of the electrification preventing layer, the known coating method is appropriately

used, and examples include roll coating, gravure coating, reverse coating, roll brushing, spray coating, and air knife coating methods, an immersing and curtain coating method, and an extrusion coating method with a die coater.

The antistatic resin layer, the conductive polymer, or the conductive resin preferably has a thickness of 0.001 to 5 μm, more preferably 0.005 to 3 μm, even more preferably 0.03 to 1 μm.

Examples of a method of depositing or plating an electrically conductive substance include vacuum deposition, sputtering, ion plating, chemical deposition, spray pyrolysis, chemical plating, and electric plating methods.

The conductive substance layer generally has a thickness of 2 to 1,000 nm, preferably 5 to 500 nm.

As the kneading-type electrification preventing agent, the aforementioned electrification preventing agent is appropriately used.

An amount of the kneading-type electrification preventing agent to be blended is 20% by weight or less, preferably in a range of 0.05 to 10% by weight relative to a total weight of a plastic film. A kneading method is not particularly limited as far as it is a method by which the electrification preventing agent can be uniformly mixed into a resin used in a plastic film, but for example, a heating roll, a Banbury mixer, a pressure kneader, and a biaxial kneading machine are used.

The plastic film may be subjected to releasing, anti-staining or acid treatment with a silicone-based, fluorine-based, long chain alkyl-based or fatty acid amide-based releasing agent, or a silica powder, or easy adhesion treatment such as alkali treatment, primer treatment, corona treatment, plasma treatment, and ultraviolet treatment, if necessary.

If necessary, the pressure-sensitive adhesive sheet of the invention may further include a separator (or a release liner, a release sheet, or the like) that is attached to the surface of the pressure-sensitive adhesive to protect the pressure-sensitive adhesive surface. A paper sheet or a plastic film may be used as a backing to form a separator, and a plastic film is preferably used because it has high surface smoothness.

The film is not particularly limited as far as it is a film which can protect the pressure-sensitive adhesive layer, and examples include a polyolefin film such as polyethylene, polypropylene, poly-1-butene, poly-4-methyl-1-pentene, an ethylene·propylene copolymer, an ethylene·1-butene copolymer, an ethylene·vinyl acetate copolymer, an ethylene·ethyl acrylate copolymer, and an ethylene·vinyl alcohol copolymer, a polyether film such as polyethylene terephthalate, polyethylene naphthalate, and polybutylene terephthalate, a polyacrylate film, a polystyrene film, a polyamide film such as nylon 6, nylon 6,6, and partially aromatic polyamide, a polyvinyl chloride film, a poly vinylidene chloride film, and a polycarbonate film.

A thickness of the film is usually around 5 to 200μm, preferably around 10 to 100μm. A pressure-sensitive adhesive layer applying surface of the film is appropriately subjected to treatment with a releasing agent such as a silicone-based, fluorine-based, long chain alkyl-based, or fatty acid amide-based releasing agent, or a silica powder.

The surface protecting film of the invention preferably has a peeling time of 80 to 600 seconds, more preferably 80 to 400 seconds as measured by a process that includes cutting the surface protecting film into a 60 mm long, 10 mm wide piece and measuring the time required to peel off a 50 mm long part of the piece under a constant load of 1.2 g. If it is less than 80 seconds, the risk of lifting or peeling may be high, and if it is more than 600 seconds, the film may have too high adhesive power and therefore be inferior in re-peeling properties, which is not preferred, though lifting or peeling can be suppressed.

The pressure-sensitive adhesive composition, the pressure-sensitive adhesive layer, and the pressure-sensitive adhesive sheet according to the invention are particularly used in plastic products and other products vulnerable to static electricity, and in particular, useful to form a surface protecting film for protecting the surface of an optical component such as a polarizing plate, a wavelength plate, an optical compensation film, a light diffusion sheet, or a reflector sheet for use in liquid crystal displays and other devices.

EXAMPLES

Examples which specifically show a construction and effect of the present invention will be explained below. Assessment items in Examples were measured by the following procedures.

<Measurement of acid value>

An acid value was measured using an automatically titrating apparatus (COM-550 manufactured by HIRANUMA SANGYO Co., Ltd.), and was obtained by the following equation.

$$A = \{(Y-X) \times f \times 5.611\}/M$$

A; Acid value
Y; Titration amount of sample solution (ml)

X; Titration amount of solution of only 50g of mixed solvent (ml)
f; Factor of titration solution
M; Weight of polymer sample (g)

Measurement conditions are as follows:

Sample solution: About 0.5g of a polymer sample was dissolved in 50g of a mixed solvent (toluene/2-propanol/distilled water= 50/49.5/0.5, weight ratio) to obtain a sample solution.
Titration solution: 0.1N 2-propanolic potassium hydroxide solution (for petroleum product neutralization value test manufactured by Wako Pure Chemical Industries, Ltd.)
Electrode: glass electrode; GE-101, comparative electrode; RE-201
Measurement mode: petroleum product neutralization value test 1

<Measurement of molecular weight>

A molecular weight was measured using a GPC apparatus (HLC-8220GPC manufactured by Tosoh Corporation). Measuring conditions are as follows.

Sample concentration: 0.2wt% (THF solution)
Sample injection amount: 10μl
Eluent: THF
Flow rate: 0.6ml/min
Measuring temperature: 40°C

Column:

Sample column; TSKguard column SuperHZ-H(1 column)+TSK gel Super HZM-H(2 columns)
Reference column; TSK gel SuperH-RC(1 column)
Detector: Refractive index detector (RI)
A molecular weight was obtained in terms of polystyrene.

<Measurement of Glass Transition Temperature (Tg)>

The glass transition temperature (Tg) (°C) of the resulting (meth)acryl-based polymers was determined by dynamic viscoelasticity measurement according to the procedure described below. An about 2 mm thick laminate of acryl-based polymer sheets each with a thickness of 20 μm was prepared and stamped into 7.9 mmφ pieces. The resulting cylindrical pellets were used as samples for glass transition temperature (Tg) measurement. The sample used was fixed on a 7.9 mmφ parallel plate tool and measured for the temperature dependence of the loss modulus G" using a dynamic viscoelasticity measurement system (ARES manufactured by Rheometric Scientific Inc.). The glass transition temperature (Tg) °C) was defined as a temperature at which the resulting G" curve was maximal. The measurement conditions were as follows: measurement: shear mode; temperature range: -70°C to 150°C; rate of temperature increase: 5°C/min; frequency: 1 Hz.

<Preparation of Acryl-Based Polymers>

(Acryl-Based Polymer (a))

To a four-neck flask equipped with a stirring blade, a thermometer, a nitrogen gas introducing tube, a condenser, and a dropping funnel were added 199 parts by weight of 2-ethylhexyl acrylate, 1 part by weight of a reactive surfactant (LATEMUL PD-420 manufactured by Kao Corporation), 8 parts by weight of 2-hydroxyethyl acrylate, 0.4 parts by weight of 2,2'-azobisisobutyronitrile as a polymerization initiator, and 386 parts by weight of ethyl acetate. While the mixture was gently stirred, nitrogen gas was introduced, and a polymerization reaction was performed for 6 hours, while the temperature of the liquid in the flask was kept at about 65°C, so that an acryl-based polymer (a) solution (35% by weight) was prepared. The acryl-based polymer (a) had a Tg of at most -10°C, a weight average molecular weight of 410,000, and an acid value of 0.0.

(Acryl-Based Polymer (b))

To a four-neck flask equipped with a stirring blade, a thermometer, a nitrogen gas introducing tube, a condenser, and a dropping funnel were added 200 parts by weight of 2-ethylhexyl acrylate, 8 parts by weight of 2-hydroxyethyl acrylate, 0.4 parts by weight of 2,2'-azobisisobutyronitrile as a polymerization initiator, and 312 parts by weight of ethyl acetate. While the mixture was gently stirred, nitrogen gas was introduced, and a polymerization reaction was performed for 6 hours, while the temperature of the liquid in the flask was kept at about 65°C, so that an acryl-based polymer (b) solution (40% by weight) was prepared. The acryl-based polymer (b) had a Tg of at most -10°C, a weight average molecular weight of 550,000, and an acid value of 0.0.

(Acryl-Based Polymer (c))

To a four-neck flask equipped with a stirring blade, a thermometer, a nitrogen gas introducing tube, a condenser, and a dropping funnel were added 199 parts by weight of 2-ethylhexyl acrylate, 1 part by weight of a reactive surfactant (LATEMUL PD-430 manufactured by Kao Corporation), 8 parts by weight of 2-hydroxyethyl acrylate, 0.4 parts by weight of 2,2'-azobisisobutyronitrile as a polymerization initiator, and 386 parts by weight of ethyl acetate. While the mixture was gently stirred, nitrogen gas was introduced, and a polymerization reaction was performed for 6 hours, while the temperature of the liquid in the flask was kept at about 65°C, so that an acryl-based polymer (c) solution (35% by weight) was prepared. The acryl-based polymer (c) had a Tg of at most -10°C, a weight average molecular weight of 450,000, and an acid value of 0.0.

<Preparation of Antistatic-Treated Film>

An antistatic agent solution was prepared by diluting 10 parts by weight of an antistatic agent (MICROSOLVER RMd-142 manufactured by SOLVEX CO., LTD., including tin oxide and polyester resin as main components) with a mixed solvent of 30 parts by weight of water and 70 parts by weight of methanol.

The resulting antistatic solution was applied to a polyethylene terephthalate (PET) film (38 μm in thickness) using a Mayer bar and dried at 130°C for 1 minute, so that as a result of the removal of the solvent, an antistatic layer (0.2 μm in thickness) was formed, and an antistatic-treated film was obtained.

<Measurement of Peeling Electrification Voltage>

The pressure-sensitive adhesive sheet was cut into a piece with a size of 70 mm in width and 130 mm in length, and the separator was peeled off. Using a hand roller, the piece was then press-bonded to the surface of a polarizing plate (SEG1425DU manufactured by NITTO DENKO CORPORATION, 70 mm in width, 100 mm in length), which had been bonded to an acrylic plate (ACRYLITE manufactured by Mitsubishi Rayon Co., Ltd., 1 mm in thickness, 70 mm in width, 100 mm in length) having undergone static elimination in advance, in such a manner that one end of the piece protruded 30 mm out of the plate.

The resulting sample was allowed to stand in an environment at 23°C and 50%RH for a day and then set at a predetermined location as shown in Fig. 1. The one end protruding 30 mm was fixed to an automatic winder, and the piece was peeled off at a peel angle of 150° and a peel rate of 30 m/minute. The potential generated on the surface of the polarizing plate in this process was measured using a potential meter (KSD-0103 manufactured by KASUGA ELECTRIC WORKS LTD.) fixed at a predetermined position, and used as the peeling electrification voltage value. The measurement was performed in an environment at 23°C and 25%RH. The absolute value of the peeling electrification voltage is preferably 0.6 kV or less, more preferably 0.5 kV or less. When it is in the above range, the product is useful because it can prevent static electricity-induced defects in liquid crystal panels.

<Evaluation of Staining Properties>

After the peeling electrification voltage was measured, the separated pressure-sensitive adhesive sheet was attached again to the polarizing plate by hand in such a manner that air bubbles were trapped between the sheet and the polarizing plate after the measurement, so that an evaluation sample was obtained.

After the evaluation sample was allowed to stand in an environment at 23°C and 50%RH for a month, the pressure-sensitive adhesive sheet was peeled off from the adherend by hand, while whether and how the surface of the adherend was stained was visually observed. The evaluation criteria were as follows.

⊙: Cases where no staining was observed.
○: Cases where staining was very slightly observed.

×: Cases where staining was observed.

<Peeling Time Under Constant Load>

The pressure-sensitive adhesive sheet was cut into a piece with a size of 10 mm in width and 60 mm in length, and the separator was peeled off. Using a hand roller, the piece was then press-bonded to the surface of a polarizing plate (SEG1425DU manufactured by NITTO DENKO CORPORATION, 70 mm in width, 100 mm in length). Subsequently, lamination was performed under the press bonding conditions of 0.25 MPa and 0.3 m/minute, so that an evaluation sample was prepared.

After the lamination, the sample was allowed to stand in an environment at 23°C and 50%RH for 30 minutes, and then a constant load (1.2 g) was fixed to one end of the sample. The evaluation sample was set as shown in Fig. 2, and peeling of the evaluation sample with the constant load was started at a peel angle of 90°. The 10 mm long part was left, and the time required to completely peel off the other 50 mm part was measured. The measurement was performed in an environment at 23°C and 50%RH. The feature that the peeling properties are high under the constant load is used as an index showing that the pressure-sensitive adhesive sheet is inhibited from lifting or peeling (or does not easily peel off).

<Measurement of Adhesive Power>

A 25 mm wide, 100 mm long, cut piece of the pressure-sensitive adhesive sheet was press-bonded to the surface of a polarizing plate (SEG1425DU manufactured by NITTO DENKO CORPORATION, 70 mm in width, 100 mm in length) using a hand roller, and then lamination was performed under the press bonding conditions of 0.25 MPa and 0.3 m/minute, so that an evaluation sample was prepared.

After the lamination, the sample was allowed to stand in an environment at 23°C and 50%RH for 30 minutes, and then using a universal tensile tester, the adhesive power was measured when the sheet was peeled off at a peel rate of 0.3 m/minute and a peel angle of 180°. The measurement was performed in an embodiment at 23°C and 50%RH. To provide a satisfactory level of adhesion reliance and re-peeling properties, the adhesive power should be 0.30 N/25 mm or less, preferably from 0.03 to 0.15 N/25 mm.

[Example 1]

(Preparation of Pressure-Sensitive Adhesive Composition)

To 60 parts by weight of a solution obtained by diluting the acryl-based polymer (a) solution (35% by weight) to 20% by weight with ethyl acetate and 40 parts by weight of a solution obtained by diluting the acryl-based polymer (b) solution (35% by weight) to 20% by weight with ethyl acetate were added 0.07 parts by weight of 1-butyl-3-methylpyridinium bis(trifluoromethanesulfonyl)imide (CIL-312 manufactured by Japan Carlit Co., Ltd., liquid at 25°C), 0.3 parts by weight of an isocyanurate of hexamethylene diisocyanate (CORONATE HX manufactured by NIPPON POLYURETHANE INDUSTRY CO., LTD.), and 0.4 parts by weight of dibutyltin dilaurate (a 1% by weight ethyl acetate solution) as a crosslinking catalyst, and mixed and stirred at 25°C for about 1 minute, so that an acrylic pressure-sensitive adhesive solution (1) was prepared.

(Preparation of Pressure-Sensitive Adhesive Sheet)

The acrylic pressure-sensitive adhesive solution (1) was applied to the opposite surface of the antistatic-treated film from its antistatic-treated surface and heated at 130°C for 2 minutes so that a 15 μm thick pressure-sensitive adhesive layer was formed. A 25 μm thick polyethylene terephthalate film with one side treated with silicone was then provided, and the silicone-treated surface of the polyethylene terephthalate film was bonded to the surface of the pressure-sensitive adhesive layer, so that a pressure-sensitive adhesive sheet was obtained.

[Example 2]

(Preparation of Pressure-Sensitive Adhesive Composition)

An acrylic pressure-sensitive adhesive solution (2) was prepared by the same method as in Example 1, except that 50 parts by weight of the solution obtained by diluting the acryl-based polymer (a) solution (35% by weight) to 20% by weight with ethyl acetate and 50 parts by weight of the solution obtained by diluting the acryl-based polymer (b) solution (35% by weight) to 20% by weight with ethyl acetate were used instead.

(Preparation of Pressure-Sensitive Adhesive Sheet)

A pressure-sensitive adhesive sheet was prepared as in Example 1, except that the acrylic pressure-sensitive adhesive solution (2) was used in place of the acrylic pressure-sensitive adhesive solution (1).

[Example 3]

(Preparation of Pressure-Sensitive Adhesive Composition)

An acrylic pressure-sensitive adhesive solution (3) was prepared by the same method as in Example 2, except that the acryl-based polymer (c) solution was used in place of the acryl-based polymer (a) solution.

(Preparation of Pressure-Sensitive Adhesive Sheet)

A pressure-sensitive adhesive sheet was prepared as in Example 2, except that the acrylic pressure-sensitive adhesive solution (3) was used in place of the acrylic pressure-sensitive adhesive solution (2).

[Example 4]

(Preparation of Pressure-Sensitive Adhesive Composition)

An acrylic pressure-sensitive adhesive solution (4) was prepared by the same method as in Example 1, except that 35 parts by weight of the solution obtained by diluting the acryl-based polymer (a) solution (35% by weight) to 20% by weight with ethyl acetate and 65 parts by weight of the solution obtained by diluting the acryl-based polymer (b) solution (35% by weight) to 20% by weight with ethyl acetate were used instead.

(Preparation of Pressure-Sensitive Adhesive Sheet)

A pressure-sensitive adhesive sheet was prepared as in Example 1, except that the acrylic pressure-sensitive adhesive solution (4) was used in place of the acrylic pressure-sensitive adhesive solution (1).

[Example 5]

(Preparation of Pressure-Sensitive Adhesive Composition)

An acrylic pressure-sensitive adhesive solution (5) was prepared by the same method as in Example 1, except that 25 parts by weight of the solution obtained by diluting the acryl-based polymer (a) solution (35% by weight) to 20% by weight with ethyl acetate and 75 parts by weight of the solution obtained by diluting the acryl-based polymer (b) solution (35% by weight) to 20% by weight with ethyl acetate were used instead.

(Preparation of Pressure-Sensitive Adhesive Sheet)

A pressure-sensitive adhesive sheet was prepared as in Example 1, except that the acrylic pressure-sensitive adhesive solution (5) was used in place of the acrylic pressure-sensitive adhesive solution (1).

[Example 6]

(Preparation of Pressure-Sensitive Adhesive Composition)

An acrylic pressure-sensitive adhesive solution (6) was prepared by the same method as in Example 1, except that 10 parts by weight of the solution obtained by diluting the acryl-based polymer (a) solution (35% by weight) to 20% by weight with ethyl acetate and 90 parts by weight of the solution obtained by diluting the acryl-based polymer (b) solution (35% by weight) to 20% by weight with ethyl acetate were used instead.

(Preparation of Pressure-Sensitive Adhesive Sheet)

A pressure-sensitive adhesive sheet was prepared as in Example 1, except that the acrylic pressure-sensitive adhesive solution (6) was used in place of the acrylic pressure-sensitive adhesive solution (1).

[Example 7]

(Preparation of Pressure-Sensitive Adhesive Composition)

An acrylic pressure-sensitive adhesive solution (7) was prepared by the same method as in Example 1, except that 0.20 parts by weight of 1-butyl-3-methylpyridinium bis(trifluoromethanesulfonyl)imide (CIL-312 manufactured by Japan Carlit Co., Ltd., liquid at 25°C) was used instead.

(Preparation of Pressure-Sensitive Adhesive Sheet)

A pressure-sensitive adhesive sheet was prepared as in Example 1, except that the acrylic pressure-sensitive adhesive solution (7) was used in place of the acrylic pressure-sensitive adhesive solution (1).

[Example 8]

(Preparation of Pressure-Sensitive Adhesive Composition)

An acrylic pressure-sensitive adhesive solution (8) was prepared by the same method as in Example 1, except that 0.6 parts by weight of an isocyanurate of hexamethylene diisocyanate (CORONATE HX manufactured by NIPPON POLYURETHANE INDUSTRY CO., LTD.) was added to 25 parts by weight of the solution obtained by diluting the acryl-based polymer (a) solution (35% by weight) to 20% by weight with ethyl acetate and 75 parts by weight of the solution obtained by diluting the acryl-based polymer (b) solution (35% by weight) to 20% by weight with ethyl acetate.

(Preparation of Pressure-Sensitive Adhesive Sheet)

A pressure-sensitive adhesive sheet was prepared as in Example 1, except that the acrylic pressure-sensitive adhesive solution (8) was used in place of the acrylic pressure-sensitive adhesive solution (1).

[Example 9]

(Preparation of Pressure-Sensitive Adhesive Composition)

To 60 parts by weight of a solution obtained by diluting the acryl-based polymer (a) solution (35% by weight) to 20% by weight with ethyl acetate and 40 parts by weight of a solution obtained by diluting the acryl-based polymer (b) solution (35% by weight) to 20% by weight with ethyl acetate were added 0.02 parts by weight of lithium bis(trifluoromethanesulfonyl)imide, 0.3 parts by weight of an isocyanurate of hexamethylene diisocyanate (CORONATE HX manufactured by NIPPON POLYURETHANE INDUSTRY CO., LTD.), and 0.4 parts by weight of dibutyltin dilaurate (a 1% by weight ethyl acetate solution) as a crosslinking catalyst, and mixed and stirred at 25°C for about 1 minute, so that an acrylic pressure-sensitive adhesive solution (9) was prepared.

(Preparation of Pressure-Sensitive Adhesive Sheet)

A pressure-sensitive adhesive sheet was prepared as in Example 1, except that the acrylic pressure-sensitive adhesive solution (9) was used in place of the acrylic pressure-sensitive adhesive solution (1).

[Example 10]

(Preparation of Pressure-Sensitive Adhesive Composition)

An acrylic pressure-sensitive adhesive solution (10) was prepared by the same method as in Example 9, except that 25 parts by weight of the solution obtained by diluting the acryl-based polymer (a) solution (35% by weight) to 20% by weight with ethyl acetate and 75 parts by weight of the solution obtained by diluting the acryl-based polymer (b) solution (35% by weight) to 20% by weight with ethyl acetate were used instead.

(Preparation of Pressure-Sensitive Adhesive Sheet)

A pressure-sensitive adhesive sheet was prepared as in Example 1, except that the acrylic pressure-sensitive adhesive solution (10) was used in place of the acrylic pressure-sensitive adhesive solution (1).

[Example 11]

(Preparation of Pressure-Sensitive Adhesive Composition)

An acrylic pressure-sensitive adhesive solution (11) was prepared by the same method as in Example 9, except that 10 parts by weight of the solution obtained by diluting the acryl-based polymer (a) solution (35% by weight) to 20% by weight with ethyl acetate and 90 parts by weight of the solution obtained by diluting the acryl-based polymer (b) solution (35% by weight) to 20% by weight with ethyl acetate were used instead.

(Preparation of Pressure-Sensitive Adhesive Sheet)

A pressure-sensitive adhesive sheet was prepared as in Example 1, except that the acrylic pressure-sensitive adhesive solution (10) was used in place of the acrylic pressure-sensitive adhesive solution (1).

[Comparative Example 1]

(Preparation of Pressure-Sensitive Adhesive Composition)

An acrylic pressure-sensitive adhesive solution (12) was prepared as in Example 1, except that 100 parts by weight of the solution obtained by diluting the acryl-based polymer (a) solution (35% by weight) to 20% by weight with ethyl acetate was used and that the acryl-based polymer (b) was not used.

(Preparation of Pressure-Sensitive Adhesive Sheet)

A pressure-sensitive adhesive sheet was prepared as in Example 1, except that the acrylic pressure-sensitive adhesive solution (12) was used in place of the acrylic pressure-sensitive adhesive solution (1).

[Comparative Example 2]

(Preparation of Pressure-Sensitive Adhesive Composition)

An acrylic pressure-sensitive adhesive solution (13) was prepared as in Example 1, except that 100 parts by weight of the solution obtained by diluting the acryl-based polymer (b) solution (35% by weight) to 20% by weight with ethyl acetate was used and that the acryl-based polymer (a) was not used.

(Preparation of Pressure-Sensitive Adhesive Sheet)

A pressure-sensitive adhesive sheet was prepared as in Example 1, except that the acrylic pressure-sensitive adhesive solution (13) was used in place of the acrylic pressure-sensitive adhesive solution (1).

[Comparative Example 3]

(Preparation of Pressure-Sensitive Adhesive Composition)

An acrylic pressure-sensitive adhesive solution (14) was prepared as in Example 9, except that 100 parts by weight of the solution obtained by diluting the acryl-based polymer (a) solution (35% by weight) to 20% by weight with ethyl acetate was used and that the acryl-based polymer (b) was not used.

(Preparation of Pressure-Sensitive Adhesive Sheet)

A pressure-sensitive adhesive sheet was prepared as in Example 1, except that the acrylic pressure-sensitive adhesive solution (14) was used in place of the acrylic pressure-sensitive adhesive solution (1).

[Comparative Example 4]

(Preparation of Pressure-Sensitive Adhesive Composition)

An acrylic pressure-sensitive adhesive solution (15) was prepared as in Example 9, except that 100 parts by

weight of the solution obtained by diluting the acryl-based polymer (b) solution (35% by weight) to 20% by weight with ethyl acetate was used and that the acryl-based polymer (a) was not used.

(Preparation of Pressure-Sensitive Adhesive Sheet)

A pressure-sensitive adhesive sheet was prepared as in Example 1, except that the acrylic pressure-sensitive adhesive solution (15) was used in place of the acrylic pressure-sensitive adhesive solution (1).
Table 1 shows the results of the evaluation of the examples and the comparative examples.
[Table 1]

| Evaluation results | Polymer weight ratio (content ratio) | | | Ionic compound | | Peeling electrification voltage | Staining properties | Peeling time under constant load | Adhesive power |
|---|---|---|---|---|---|---|---|---|---|
| | (a) | (b) | (c) | Type | Content | kV | - | seconds | N/25 mm |
| Example 1 | 60 | 40 | - | Ionic liquid | 0.35 | 0.0 | ⊙ | 83 | 0.06 |
| Example 2 | 50 | 50 | - | Ionic liquid | 0.35 | 0.0 | ⊙ | 96 | 0.07 |
| Example 3 | - | 50 | 50 | Ionic liquid | 0.35 | 0 . 0 | ⊙ | 85 | 0.06 |
| Example 4 | 35 | 65 | - | Ionic liquid | 0.35 | 0.0 | ⊙ | 137 | 0.09 |
| Example 5 | 25 | 75 | - | Ionic liquid | 0.35 | 0.0 | ⊙ | 216 | 0.11 |
| Example 6 | 10 | 90 | - | Ionic liquid | 0.35 | -0.4 | ○ | 330 | 0.13 |
| Example 7 | 60 | 40 | - | Ionic liquid | 1.00 | 0.0 | ○ | 92 | 0.06 |
| Example 8 | 25 | 75 | - | Ionic liquid | 0.35 | -0.4 | ⊙ | 86 | 0.05 |
| Example 9 | 60 | 40 | - | Lithium salt | 0.10 | -0.2 | ⊙ | 87 | 0.07 |
| Example 10 | 25 | 75 | - | Lithium salt | 0.10 | -0.3 | ⊙ | 220 | 0.11 |
| Example 11 | 10 | 90 | - | Lithium salt | 0.10 | -0.5 | ⊙ | 398 | 0.16 |
| Comparative Example 1 | 100 | - | - | Ionic liquid | 0.35 | 0.0 | ⊙ | 59 | 0.05 |
| Comparative Example 2 | - | 100 | - | Ionic liquid | 0.35 | -0.7 | × | 440 | 0.16 |
| Comparative Example 3 | 100 | - | - | Lithium salt | 0.10 | -0.2 | ⊙ | 62 | 0.04 |

(continued)

| Evaluation results | Polymer weight ratio (content ratio) | | | Ionic compound | | Peeling electrification voltage | Staining properties | Peeling time under constant load | Adhesive power |
|---|---|---|---|---|---|---|---|---|---|
| | (a) | (b) | (c) | Type | Content | kV | - | seconds | N/25 mm |
| Comparative Example 4 | - | 100 | - | Lithium salt | 0.10 | -0.5 | × | 766 | 0.19 |
| Note: In the table, the content of the ionic compound is indicated in parts by weight based on 100 parts by weight of the polymer solid. | | | | | | | | | |

The results in Table 1 show that when the pressure-sensitive adhesive composition prepared according to the invention was used (Examples 1 to 11), the absolute value of the peeling electrification voltage on the polarizing plate was reduced to 0.5 kV or less, the polarizing plate was not stained, the peeling time under a constant load fell within the desired range, lifting or peeling was suppressed, and a high level of adhesion reliance and re-peeling properties were provided in all the examples.

In contrast, it is apparent that in Comparative Examples 1 and 3 using only the (meth)acryl-based polymer (a) produced with a reactive surfactant, which are not according to the invention, the peeling time under a constant load was relatively short though the staining properties were at an acceptable level, while in Comparative Examples 2 and 4 using only the (meth)acryl-based polymer (b) produced with no reactive surfactant, the staining properties were extremely unacceptable. The peeling electrification voltage was particularly unacceptable in Comparative Example 2, and therefore, it has been shown that these comparative examples cannot simultaneously achieve low staining properties and suppression of lifting or peeling.

## Claims

1. A pressure-sensitive adhesive composition, comprising:

(a) a (meth)acryl-based polymer containing, as a monomer unit, 0.01 to 20% by weight of a reactive surfactant represented by Formula (I):

[Formula 1]

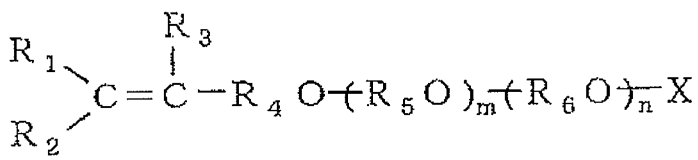

(I)

wherein $R_1$, $R_2$, and $R_3$ are the same or different and each represent hydrogen or a methyl group, $R_4$ represents an alkylene group of 0 to 30 carbon atoms, wherein alkylene of 0 carbon atoms means the absence of $R_4$, $R_5$ and $R_6$ are the same or different and each represent an alkylene group of 1 to 30 carbon atoms, m represents an integer of 0 to 50, n represents an integer of 0 to 100, provided that m + n is an integer of 1 to 150, and X represents hydrogen or an anionic hydrophilic group;
(b) another (meth)acryl-based polymer free of the reactive surfactant; and
an ionic compound.

2. The pressure-sensitive adhesive composition according to claim 1, wherein the ionic compound is an ionic liquid and/or an alkali metal salt.

3. The pressure-sensitive adhesive composition according to claim 2, wherein the ionic liquid is at least one of a nitrogen-containing onium salt, a sulfur-containing onium salt, or a phosphorus-containing onium salt.

4. The pressure-sensitive adhesive composition according to claim 2 or 3, wherein the ionic liquid contains at least one of a cation represented by Formulae (A) to (D).

[Formula 2]

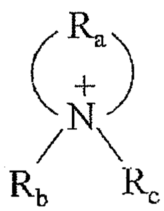
(A)

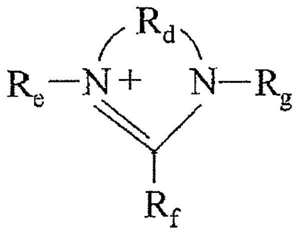
(B)

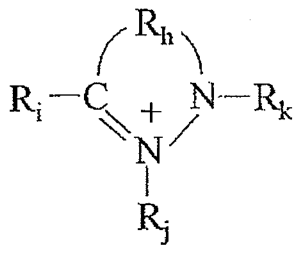
(C)

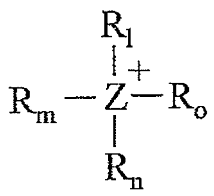
(D)

[in the formula (A), $R_a$ represents a hydrocarbon group of 4 to 20 carbon atoms, which may contain a hetero atom, and $R_b$ and $R_c$ are the same or different and each represent hydrogen or a hydrocarbon group of 1 to 16 carbon atoms, which may contain a hetero atom, provided that when the nitrogen atom contains a double bond, Rc is absent.] [in the formula (B), $R_d$ represents a hydrocarbon group of 2 to 20 carbon atoms, which may contain a hetero atom, $R_e$, $R_f$, and Rg are the same or different and each represent hydrogen or a hydrocarbon group of 1 to 16 carbon atoms, which may contain a hetero atom.]
[in the formula (C), $R_h$ represents a hydrocarbon group of 2 to 20 carbon atoms, which may contain a hetero atom, $R_i$, $R_j$, and $R_k$ are the same or different and each represent hydrogen or a hydrocarbon group of 1 to 16 carbon atoms, which may contain a hetero atom.]
[in the formula (D), Z represents a nitrogen, sulfur, or phosphorus atom, and $R_i$, $R_m$, $R_n$, and $R_o$ are the same or different and each represent a hydrocarbon group of 1 to 20 carbon atoms, which may contain a hetero atom, provided that when Z is a sulfur atom, $R_o$ is absent.]

5. The pressure-sensitive adhesive composition according to any one of claims 1 to 4, wherein the (meth)acryl-based polymer (a) and the (meth)acryl-based polymer (b) are in a weight ratio (a) : (b) of 60 : 40 to 10 : 90.

6. The pressure-sensitive adhesive composition according to any one of claims 1 to 5, wherein the (meth)acryl-based polymer (a) and the (meth)acryl-based polymer (b) each have a weight average molecular weight of 200,000 to 1,000,000.

7. The pressure-sensitive adhesive composition according to any one of claims 1 to 6, which contains 0.01 to 10 parts by weight of the ionic compound, based on 100 parts by weight of the total of the (meth)acryl-based polymer (a) and the (meth)acryl-based polymer (b).

8. A pressure-sensitive adhesive layer comprising a product obtained by crosslinking the pressure-sensitive adhesive composition according to any one of claims 1 to 7.

9. A pressure-sensitive adhesive sheet, comprising: a support; and a pressure-sensitive adhesive layer that is formed on one or both sides of the support by crosslinking the pressure-sensitive adhesive composition according to any one of claims 1 to 7.

10. A surface protecting film, comprising: a support comprising an antistatic-treated plastic base material; and a pressure-sensitive adhesive layer that is formed on one or both sides of the support by crosslinking the pressure-sensitive adhesive composition according to any one of claims 1 to 7.

11. The surface protecting film according to claim 10, which has a peeling time of 80 to 600 seconds as measured by a process that comprises cutting the surface protecting film into a 60 mm long, 10 mm wide piece and measuring the time required to peel off a 50 mm long part of the piece under a constant load of 1.2 g.

Fig.1

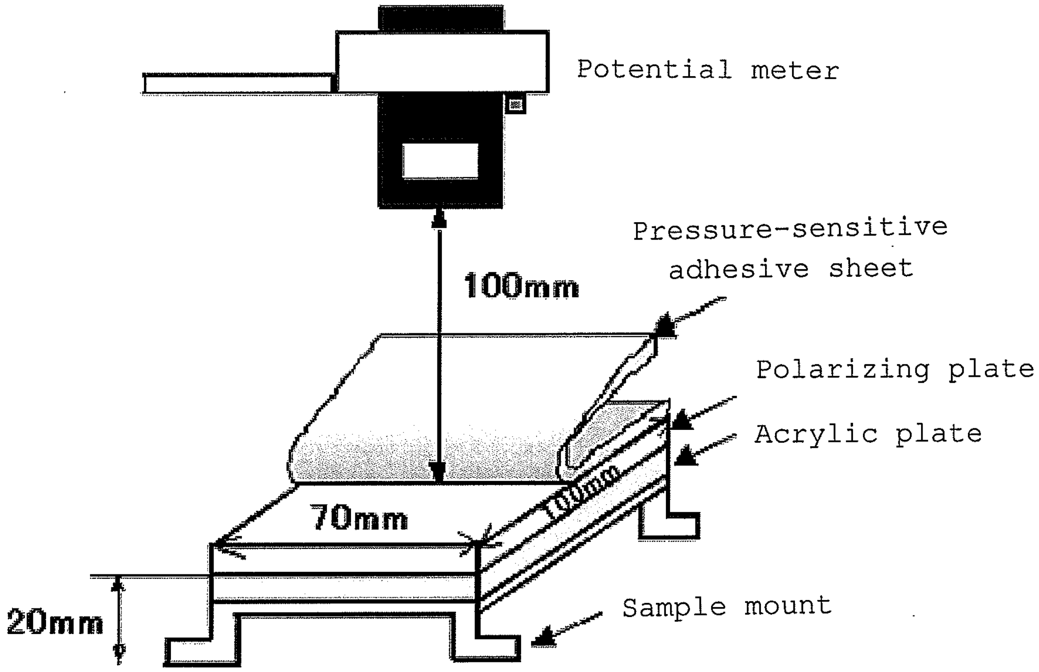
Potential meter
100mm
Pressure-sensitive adhesive sheet
Polarizing plate
Acrylic plate
70mm
100mm
20mm
Sample mount

Fig.2

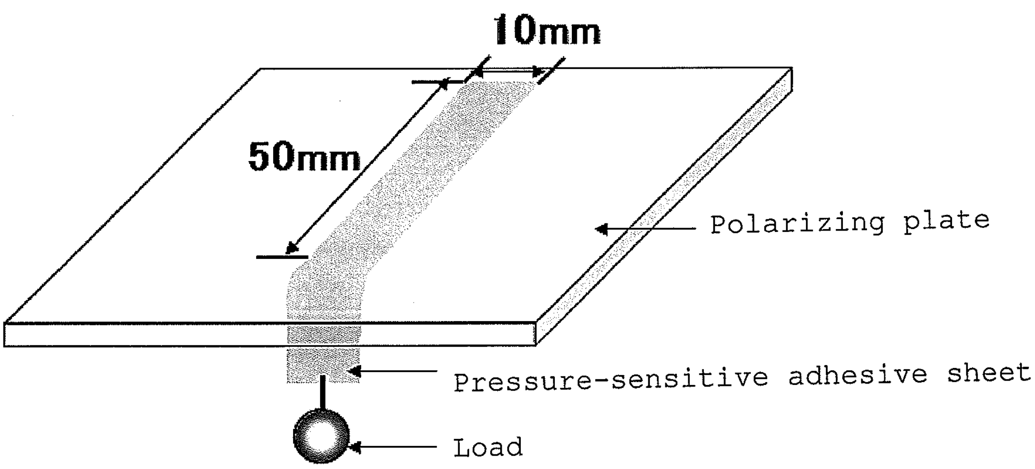
10mm
50mm
Polarizing plate
Pressure-sensitive adhesive sheet
Load

**INTERNATIONAL SEARCH REPORT**

International application No.
PCT/JP2011/054718

A. CLASSIFICATION OF SUBJECT MATTER
*C09J133/04*(2006.01)i, *C09J7/02*(2006.01)i, *C09J11/06*(2006.01)i

According to International Patent Classification (IPC) or to both national classification and IPC

B. FIELDS SEARCHED

Minimum documentation searched (classification system followed by classification symbols)
C09J133/04, C09J7/02, C09J11/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-291172 A (Nitto Denko Corp.), 26 October 2006 (26.10.2006), claims; examples & EP 1702967 A1 & US 2006/207722 A1 & KR 2006-100261 A & CN 1840600 A & TW 200643132 A & DE 602006011972 A | 1-11 |
| Y | JP 2007-070400 A (Nitto Denko Corp.), 22 March 2007 (22.03.2007), claims; examples (Family: none) | 1-11 |
| Y | JP 2009-138152 A (The Nippon Synthetic Chemical Industry Co., Ltd.), 25 June 2009 (25.06.2009), claims; examples (Family: none) | 1-11 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 April, 2011 (04.04.11) | 12 April, 2011 (12.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/054718

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-050419 A (Diatex Co., Ltd.),<br>06 March 2008 (06.03.2008),<br>claims; examples<br>(Family: none) | 1-11 |
| Y | JP 2007-169329 A (Saiden Chemical Industry Co., Ltd.),<br>05 July 2007 (05.07.2007),<br>claims; examples; paragraphs [0041], [0042]<br>(Family: none) | 1-11 |
| Y | JP 2008-239965 A (Sanyo Chemical Industries, Ltd.),<br>09 October 2008 (09.10.2008),<br>claims; examples<br>(Family: none) | 1-11 |
| Y | JP 2001-040312 A (Toagosei Co., Ltd.),<br>13 February 2001 (13.02.2001),<br>claims; examples<br>(Family: none) | 1-11 |
| X | JP 2007-092057 A (Nitto Denko Corp.),<br>12 April 2007 (12.04.2007),<br>claims; examples<br>& WO 2007/029681 A1 & EP 1939263 A1<br>& CN 101243153 A & KR 2008-044329 A<br>& TW 200710197 A & US 2009/163626 A1 | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9165460 A
- JP 6128539 A
- JP 2005206776 A


### Non-patent literature cited in the description


- Ionic liquid-The Front and Future of Development. CMC